(19) **Europäisches Patentamt / European Patent Office / Office européen des brevets**

(11) **EP 4 783 072 A1**

(12) **EUROPEAN PATENT APPLICATION**
published in accordance with Art. 153(4) EPC

(43) Date of publication:
**29.07.2026 Bulletin 2026/31**

(21) Application number: **24870884.4**

(22) Date of filing: **26.09.2024**

(51) International Patent Classification (IPC):
**G06N 3/08** (2023.01)

(52) Cooperative Patent Classification (CPC):
**G06N 3/0464; G06N 3/047; G06N 3/0475; G06N 3/048; G06N 3/08; G06N 3/09; G06N 3/092; G06N 3/094**

(86) International application number:
**PCT/CN2024/121470**

(87) International publication number:
**WO 2025/067344 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 CN 202311294251**

(71) Applicant: **HUAWEI TECHNOLOGIES CO., LTD. Shenzhen 518129 (CN)**

(72) Inventors:
• **TIAN, Yang**
  **Shenzhen, Guangdong 518129 (CN)**
• **SUN, Yan**
  **Shenzhen, Guangdong 518129 (CN)**
• **JIN, Huangping**
  **Shenzhen, Guangdong 518129 (CN)**

(74) Representative: **Thun, Clemens**
  **Mitscherlich PartmbB**
  **Karlstraße 7**
  **80333 München (DE)**

(54) **ARTIFICIAL INTELLIGENCE MODEL TRAINING METHOD AND COMMUNICATION APPARATUS**

(57)    This application provides an artificial intelligence model training method and a communication apparatus, and relates to the field of communication technologies. In the artificial intelligence model training method, a parameter that needs to be updated in a first model may be determined based on obtained recognition information of a first scenario, and the parameter that needs to be updated in the first model is updated, but not all parameters are updated, to effectively reduce overall overheads for model update.

FIG. 6

## Description

This application claims priority to Chinese Patent Application No. 202311294251.0, filed with the China National Intellectual Property Administration on September 28, 2023 and entitled "ARTIFICIAL INTELLIGENCE MODEL TRAINING METHOD AND COMMUNICATION APPARATUS", which is incorporated herein by reference in its entirety.

## TECHNICAL FIELD

This application relates to the field of communication technologies, and more specifically, to an artificial intelligence model training method and a communication apparatus.

## BACKGROUND

Artificial intelligence (artificial intelligence, AI) has been widely used in the field of communication technologies, to improve performance of communication between a terminal device and a network device.

In specific application of AI, an AI model can be used in a specific scenario. When switching is performed for the AI model from one scenario to another scenario, to enable the AI model to be used in the newly-switched-to scenario, data of the newly-switched-to scenario may be obtained, and the AI model is updated by using the data of the newly-switched-to scenario, to obtain an updated AI model. The updated AI model can be used in the newly-switched-to scenario. However, the foregoing solution may cause high overall overheads for model update.

## SUMMARY

This application provides an artificial intelligence model training method and a communication apparatus, to reduce overall overheads for model update.

According to a first aspect, an artificial intelligence model training method is provided, including: obtaining recognition information of a first scenario; and determining a first parameter in a first model based on the recognition information of the first scenario, where the first parameter is used to determine a parameter that needs to be updated in the first model.

The solution in the first aspect may be applied to a model training network element or a model deployment network element, for example, may be performed by the model training network element or the model deployment network element or a chip or a module used in the model training network element or the model deployment network element.

The parameter that needs to be updated in the first model is determined based on recognition information of a scenario, so that model update is performed on the parameter that needs to be updated in the first model, and there is no need to update all parameters in the first model. In this way, overall overheads for model update can be effectively reduced.

In a possible implementation, the determining the first parameter in the first model based on the recognition information of the first scenario includes: determining the first parameter based on the recognition information of the first scenario and at least one association relationship, where a first association relationship in the at least one association relationship is used to associate the first parameter with the first scenario.

Association relationships between a plurality of different scenarios and parameters in the first model are set, and the first parameter associated with the first scenario is determined based on the recognition information of the first scenario and the at least one association relationship. In this way, the parameter that needs to be updated in the first model can be determined.

In a possible implementation, the at least one association relationship is predefined or preconfigured.

In this way, signaling overheads used for exchanging an association relationship between a scenario and a parameter in the first model can be reduced.

In a possible implementation, the method further includes: communicating the first parameter.

In this way, another network element can determine the parameter that needs to be updated in the first model.

In a possible implementation, the method further includes: determining, based on the recognition information of the first scenario, that the first scenario is not a scenario currently supported by the first model; and communicating a message indicating to obtain data of the first scenario.

The data of the first scenario can be used to update the first model, and an updated first model can be used in the first scenario.

In this way, the data of the first scenario can be obtained, so that update training can be performed on the first model by using the data of the first scenario.

In a possible implementation, the method further includes: obtaining first data, where the first data is related to the first scenario; and updating, by using the first data, the parameter that needs to be updated in the first model, to obtain an updated first model.

For example, a scenario related to the first scenario may be a scenario having a data feature the same as or similar to that of the first scenario, a scenario of a same type as the first scenario, or a scenario having a scenario feature similar to or the same as that of the first scenario. "Similar" means that a same condition is met, for example, each is lower than a threshold or higher than a threshold. Alternatively, "similar" means that a difference is lower than a threshold. One or more of a specific threshold, specific feature information, or a specific data feature may be predefined or preconfigured. This is not limited herein.

Because the first data is related to the first scenario, the first model is updated by using the first data, and the updated first model can support the first scenario.

In a possible implementation, the first data includes any one of the following: the data of the first scenario, the data of the first scenario and data of the scenario related to the first scenario, or data obtained through data generation based on the data of the first scenario and a data feature of second data, where the second data is data of the scenario currently supported by the first model, and the scenario related to the first scenario is the scenario currently supported by the first model.

Based on one or more of the items enumerated above, completion of update training on the parameter that needs to be updated in the first model is supported in this application, so that an updated first model can be used in the first scenario.

In a possible implementation, the obtaining the first data includes: obtaining the first data from a data collection network element, where the first data is the data of the first scenario; obtaining the first data from a data generation network element, where the first data is the data obtained through data generation based on the data of the first scenario and the data feature of the second data; or obtaining the first data from a data storage network element, where the first data is the data of the first scenario and the data of the scenario related to the first scenario.

In this way, obtaining, in a plurality of ways, data used to perform update training on the parameter that needs to be updated in the first model is supported in this application.

In a possible implementation, the parameter that needs to be updated in the first model is the first parameter, or the parameter that needs to be updated in the first model is a part or all of parameters in the first model other than the first parameter.

When the parameter that needs to be updated in the first model is the first parameter, directly determining the parameter that needs to be updated in the first model is supported in this application. When the parameter that needs to be updated in the first model is a part or all of parameters in the first model other than the first parameter, using low signaling overheads to indicate the parameter that needs to be updated in the first model is supported in this application.

In a possible implementation, the data feature of the second data includes at least one of the following: a signal-to-noise ratio (signal-to-noise ratio, SNR), a signal to interference plus noise ratio (signal to interference plus noise ratio, SINR), a reference signal received power (reference signal received power, RSRP), or a data distribution status.

The data distribution status may include one or more of the following cases: hidden variable variational probability distribution obtained through variational inference performed on data, probability distribution obtained through fitting performed on data by using a Gaussian mixture model, and potential distribution obtained through adversarial process learning performed on data.

In this way, based on one or more of the parameters enumerated above, generation of a large amount of data that can be used to update the first model is supported in this application.

In a possible implementation, the method further includes: determining, based on the recognition information of the first scenario, that the first scenario is not the scenario currently supported by the first model.

When it is determined, based on the recognition information of the first scenario, that the first scenario is not the scenario currently supported by the first model, in this application, a collection procedure for the data of the first scenario may be started, and the data related to the first scenario is used to perform update training on the parameter that needs to be updated in the first model, so that an updated first model can support the first scenario.

According to a second aspect, an artificial intelligence model training method is provided, including: obtaining recognition information of a first scenario; determining, based on the recognition information of the first scenario, a scenario related to the first scenario, where the scenario related to the first scenario is a scenario currently supported by a first model; and obtaining amount information of data of the scenario related to the first scenario, where the data of the scenario related to the first scenario is used to update the first model, and an updated first model supports the first scenario.

The solution in the second aspect may be applied to a model training network element or a model deployment network element, for example, may be performed by the model training network element or the model deployment network element or a chip or a module used in the model training network element or the model deployment network element.

For example, the scenario related to the first scenario may be a scenario having a data feature the same as or similar to that of the first scenario, a scenario of a same type as the first scenario, or a scenario having a scenario feature similar to or the same as that of the first scenario. "Similar" means that a same condition is met, for example, each is lower than a threshold or higher than a threshold. Alternatively, "similar" means that a difference is lower than a threshold. One or more of a specific threshold, specific feature information, or a specific data feature may be predefined or preconfigured. This is not limited herein.

The scenario related to the first scenario is determined based on the recognition information of the first scenario, and the amount information of the data of the scenario related to the first scenario is obtained. This helps reduce an amount of data that needs to be obtained from the first scenario, thereby reducing overheads for data collection, and further reducing overall overheads for model update.

In a possible implementation, when the second aspect is applied to the model training network element, the method may further include: obtaining the data of the scenario related to the first scenario. In this way, the model training network element may perform training based on the stored data of the scenario related to the first scenario. This can effectively use the stored or obtained data, thereby reducing an amount of to-be-obtained data in the first scenario and accelerating model update.

In a possible implementation, the method further includes: determining, based on the recognition information of the first scenario, that the first scenario is not the scenario currently supported by the first model; and sending first indication information, where the first indication information indicates the amount of the to-be-obtained data in the first scenario, the amount information of the data of the scenario related to the first scenario is used to determine the amount of the to-be-obtained data in the first scenario, and data of the first scenario is used to update the first model.

In this way, the amount of the data that needs to be obtained from the first scenario may be indicated.

In a possible implementation, the determining, based on the recognition information of the first scenario, the scenario related to the first scenario includes: determining according to a predefined rule, or determining based on feature information of a scenario.

In this way, the scenario related to the first scenario can be determined.

In a possible implementation, the first indication information further indicates to obtain the data of the first scenario.

In this way, the data of the first scenario can be obtained.

According to a third aspect, an artificial intelligence model training method is provided, including: obtaining recognition information of a first scenario; determining, based on the recognition information of the first scenario, that the first scenario is not a scenario currently supported by a first model; and communicating first indication information, where the first indication information indicates to obtain data of the first scenario, the data of the first scenario is used to update the first model, and an updated first model supports the first scenario.

The solution in the third aspect may be applied to a model deployment network element, for example, may be performed by the model deployment network element or a chip or a module used in the model deployment network element.

Whether the data of the first scenario needs to be obtained is determined based on recognition information of a scenario. This helps avoid repeated data collection. In addition, when it is determined that the data of the first scenario needs to be obtained, the data of the first scenario may be indicated to be obtained, and update training is performed on the first model by using the data of the first scenario, so that an updated first model can support the first scenario.

In addition, according to the foregoing solution, in this application, a case in which update training is performed on the first model when update training does not need to be performed on the first model can be avoided, thereby effectively reducing overall overheads for model update.

According to a fourth aspect, an artificial intelligence model training method is provided, including: obtaining data of a first scenario; performing data generation based on the data of the first scenario and a data feature of second data, to obtain first data, where the second data is data of a scenario currently supported by a first model, the first data is used to update the first model, and an updated first model supports the first scenario; and sending the first data.

The solution in the fourth aspect may be applied to a data generation network element, for example, may be performed by the data generation network element or a chip or a module used in the data generation network element.

The first data is generated based on the data of the first scenario and the data feature of the second data, and there is no need to obtain a large amount of data in the first scenario. In this case, that the updated first model can be used in the first scenario and the scenario supported before the update can be supported in this application. This can effectively reduce overheads for data collection, thereby effectively reducing overall overheads for model update.

In a possible implementation, the data feature of the second data includes at least one of the following: an SNR, an SINR, an RSRP, or a data distribution status.

The data distribution status may include one or more of the following cases: hidden variable variational probability distribution obtained through variational inference performed on data, probability distribution obtained through fitting performed on data by using a Gaussian mixture model, and potential distribution obtained through adversarial process learning performed on data.

In this way, based on one or more of the parameters enumerated above, generation of a large amount of data that can be used to update the first model is supported in this application.

According to a fifth aspect, an artificial intelligence model training method is provided, including: determining recognition information of a first scenario; and sending the recognition information of the first scenario.

The solution in the fifth aspect may be applied to a data collection network element, for example, may be performed by the data collection network element or a chip or a module used in the data collection network element. In a possible implementation, the determining the recognition information of the first scenario may include: obtaining the recognition information of the first scenario or sensing the recognition information of the first scenario. This is not limited.

The recognition information of the first scenario is reported, so that another network element or device can determine, based on the recognition information of the first scenario, whether update training on a first model needs to be started and whether a collection procedure for data of the first scenario needs to be started, thereby supporting effective reduction of overall overheads for model update.

In a possible implementation, the method further includes: receiving indication information, where the indication information indicates to obtain the data of the first scenario; and obtaining the data of the first scenario.

In this way, the data of the first scenario can be obtained based on the indication information.

In a possible implementation, the indication information includes information about an amount of to-be-obtained data in the first scenario.

In this way, there is no need to obtain a large amount of data from the first scenario. This helps reduce overheads for data collection, thereby supporting effective reduction of the overall overheads for the model update.

In a possible implementation, the obtaining the data of the first scenario includes: obtaining the data of the first scenario based on the information about the amount of the to-be-obtained data in the first scenario.

In this way, the data of the first scenario can be obtained based on the indicated amount of the to-be-obtained data in the first scenario.

According to a sixth aspect, an artificial intelligence model training method is provided, including: obtaining indication information, where the indication information indicates to obtain data of a scenario related to a first scenario, and the indication information includes identification information of the scenario related to the first scenario; determining, based on the identification information of the scenario related to the first scenario and at least one association relationship, the data of the scenario related to the first scenario, where a first association relationship in the at least one association relationship is used to associate the scenario related to the first scenario with the data of the scenario related to the first scenario; and communicating the data of the scenario related to the first scenario.

The solution in the sixth aspect may be applied to a data storage network element, for example, may be performed by the data storage network element or a chip or a module used in the data storage network element.

Optionally, the scenario related to the first scenario may be a scenario having a data feature the same as or similar to that of the first scenario, a scenario of a same type as the first scenario, or a scenario having a scenario feature similar to or the same as that of the first scenario. "Similar" means that a same condition is met, for example, each is lower than a threshold or higher than a threshold. Alternatively, "similar" means that a difference is lower than a threshold. One or more of a specific threshold, specific feature information, or a specific data feature may be predefined or preconfigured. This is not limited herein.

The data of the scenario related to the first scenario is sent, so that the data of the scenario related to the first scenario can be used for update training on the first model. This can effectively use stored data, and can reduce an amount of data that needs to be obtained from the first scenario, thereby effectively reducing overheads for data collection, and further supporting reduction of overall overheads for model update.

In a possible implementation, the at least one association relationship is predefined or preconfigured.

In this way, signaling overheads used for exchanging an association relationship between a scenario and data of the scenario can be reduced.

According to a seventh aspect, a communication apparatus is provided. The communication apparatus includes a one-to-one corresponding module or unit configured to perform the method/operation/step/action described in any one of the first aspect to the sixth aspect and the possible implement of the aspects. The module or unit may be implemented by a hardware circuit, software, or a combination of the hardware circuit and the software.

According to an eighth aspect, a communication apparatus is provided, including a processor. The processor is configured to: by executing a computer program or instructions or through a logic circuit, cause the communication apparatus to perform the method according to any one of the first aspect and the possibilities of the first aspect; or cause the communication apparatus to perform the method according to any one of the second aspect and the possibilities of the second aspect; or cause the communication apparatus to perform the method according to any one of the third aspect and the possibilities of the third aspect; or cause the communication apparatus to perform the method according to any one of the fourth aspect and the possibilities of the fourth aspect; or cause the communication apparatus to perform the method according to any one of the fifth aspect and the possibilities of the fifth aspect; or cause the communication apparatus to perform the method according to any one of the sixth aspect and the possibilities of the sixth aspect.

In a possible implementation, the communication apparatus further includes a memory, and the memory is configured to store the computer program or the instructions.

In a possible implementation, the communication apparatus further includes a communication interface, and the communication interface is configured to input and/or output a signal.

According to a ninth aspect, a communication apparatus is provided, including a logic circuit and an input/output interface. The input/output interface is configured to input and/or output a signal. The logic circuit is configured to perform the method according to any one of the first aspect and the possibilities of the first aspect; or the logic circuit is configured to perform the method according to any one of the second aspect and the possibilities of the second aspect; or the logic circuit is configured to perform the method according to any one of the third aspect and the possibilities of the third aspect; or the logic circuit is configured to perform the method according to any one of the fourth aspect and the possibilities of the fourth aspect; or the logic circuit is configured to perform the method according to any one of the fifth aspect and the possibilities of the fifth aspect; or the logic circuit is configured to perform the method according to any one of the sixth aspect and the possibilities of the sixth aspect.

According to a tenth aspect, a computer-readable storage medium is provided. The computer-readable storage medium stores a computer program or instructions. When the computer program or the instructions are run on a computer, the method according to any one of the first aspect and the possibilities of the first aspect is performed; or the method according to any one of the second aspect and the possibilities of the second aspect is performed; or the method according to any one of the third aspect and the possibilities of the third aspect is performed; or the method according to any one of the fourth aspect and the possibilities of the fourth aspect is performed; or the method according to any one of the fifth aspect and the possibilities of the fifth aspect is performed; or the method according to any one of the sixth aspect and the possibilities of the sixth aspect is performed.

According to an eleventh aspect, a computer program product is provided, including instructions. When the instructions are run on a computer, the method according to any one of the first aspect and the possibilities of the first aspect is performed; or the method according to any one of the second aspect and the possibilities of the second aspect is performed; or the method according to any one of the third aspect and the possibilities of the third aspect is performed; or the method according to any one of the fourth aspect and the possibilities of the fourth aspect is performed; or the method according to any one of the fifth aspect and the possibilities of the fifth aspect is performed; or the method according to any one of the sixth aspect and the possibilities of the sixth aspect is performed.

According to a twelfth aspect, a communication system is provided, including one or more of a model training network element, a data collection network element, a model deployment network element, a data storage network element, a data generation network element, or the like. The network element is configured to perform the method according to the foregoing corresponding aspect.

For example, the communication system includes the model training network element and the model deployment network element; or the communication system includes the model deployment network element and the data collection network element; or the communication system includes the model training network element, the data collection network element, and the data generation network element; or the communication system includes the model training network element, the model deployment network element, the data collection network element, the data storage network element, and the like; or the communication system includes the model training network element, the model deployment network element, the data collection network element, the data generation network element, and the like; or the communication system includes the model training network element, the data collection network element, the data generation network element, and the like. This is not limited.

Descriptions of beneficial effects of the seventh aspect to the twelfth aspect may correspond to descriptions of beneficial effects of the first aspect to the sixth aspect.

## BRIEF DESCRIPTION OF DRAWINGS

FIG. 1 is a diagram of an application framework 100 in a communication system according to an embodiment of this application;
FIG. 2 is a diagram of an application framework 200 in a communication system according to an embodiment of this application;
FIG. 3 is a diagram of a communication system 300 to which an embodiment of this application is applicable;
FIG. 4 is a diagram of a communication system 400 to which an embodiment of this application is applicable;
FIG. 5 is a diagram of a neuron structure 500;
FIG. 6 is a diagram of an AI model training method 600 according to an embodiment of this application;
FIG. 7 is a diagram of an AI model training method 700 according to an embodiment of this application;
FIG. 8 is a diagram of an AI model training method 800 according to an embodiment of this application;
FIG. 9 is a diagram of an AI model training method 900 according to an embodiment of this application;
FIG. 10 is a block diagram of a communication apparatus 1000 according to an embodiment of this application; and
FIG. 11 is a block diagram of a communication apparatus 1100 according to an embodiment of this application.

## DESCRIPTION OF EMBODIMENTS

For ease of understanding embodiments of this application, the following descriptions are provided first.

1. In this application, unless otherwise specified, "a plurality of" means two or more.
2. In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

3. Various numbers in this application are merely used for distinguishing for ease of description, but are not used to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other term numerals (if existent) are intended to distinguish between similar objects, but do not necessarily indicate a specific order or sequence. Data used in such a way is interchangeable in appropriate circumstances, so that embodiments described herein can be implemented in other orders than the order illustrated or described herein. In addition, any embodiment or design scheme described as an "example" or "for example" in this application should not be explained as being more preferred or having more advantages than another embodiment or design scheme. Exactly, use of the terms such as "example" or "for example" is intended to present a related concept in a specific manner for ease of understanding.

4. The terms "include", "have", and any variants thereof are intended to cover a non-exclusive inclusion. For example, a process, method, system, product, or device that includes a series of steps or units is not necessarily limited to those expressly listed steps or units, but may include other steps or units not expressly listed or inherent to such a process, method, product, or device.

5. In this application, "indicate" may be understood as "enable", and "enable" may include "directly enable" and "indirectly enable". When a piece of information is described to enable A, the information may directly enable A or indirectly enable A, but it does not mean that the information definitely carries A. Information enabled by the information is referred to as to-be-enabled information. In a specific implementation process, the to-be-enabled information may be enabled in many manners, for example, but not limited to, the to-be-enabled information, for example, the to-be-enabled information or an index of the to-be-enabled information, may be directly enabled. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, to reduce enabling overheads to some extent. In addition, a common part of all information may be identified and enabled in a unified manner, to reduce enabling overheads caused by enabling the same information separately.

6. In this application, "preconfiguration" may include predefinition, for example, definition in a protocol. "Predefinition" may be implemented by pre-storing, in a device (for example, including network elements), corresponding code, a corresponding table, or other related information that may be used for indication. A specific implementation of "predefinition" is not limited in this application.

7. "Storage" or "store" in this application may mean "being stored" in one or more memories. The one or more memories may be separately disposed, or may be integrated into an encoder, a decoder, a processor, or a communication apparatus. Alternatively, some of the one or more memories may be separately disposed, and some of the one or more memories are integrated into the decoder, the processor, or the communication apparatus. A type of the memory may be a storage medium in any form. This is not limited.

8. A "protocol" in this application may be a standard protocol in the communication field, for example, may include a 4th generation (4th generation, 4G) network device, a 5th generation (5th generation, 5G) network protocol, a new radio (new radio, NR) protocol, a 5.5G network protocol, a 6th generation (6th generation, 6G) network protocol, and related protocols used in future communication systems. This is not limited in this application.

9. Arrows or blocks shown by dashed lines in diagrams of the accompanying drawings in the specification of this application indicate optional steps or optional modules.

10. In this application, unless otherwise specified, "/" indicates an "or" relationship between associated objects. For example, A/B may indicate A or B. "And/or" in this application describes only an association relationship for describing associated objects and indicates that three relationships may exist. For example, A and/or B may indicate the following three cases: Only A exists, both A and B exist, and only B exists, where A and B may be singular or plural.

First, a communication system to which an embodiment of this application is applicable is described.

The technical solutions provided in this application may be applied to various communication systems, for example, a 5G or NR system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system like a 6G mobile communication system, or a converged system of a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A network element in the communication system may send a signal to another network element or receive a signal from another network element. The signal may include information, signaling, data, or the like. The network element may alternatively be replaced with an entity, a network entity, a device, a communication device, a communication module, a node, a communication node, or the like. In embodiments of this application, the network element is used as an example for description. For example, the communication system may include at least one terminal device and at least one network device. The network device may send a downlink signal to the terminal device, and/or the terminal device may send an uplink signal to the network device. It may be understood that the terminal device in embodiments of this application may be replaced with a first network element, the network device may be replaced with a second network element, and the terminal device and the network device perform a corresponding communication method in embodiments of this application.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice or data, for example, a handheld device or a vehicle-mounted device having a wireless connection function. Currently, some examples of the terminal are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile network (public land mobile network, PLMN), or the like. This is not limited in embodiments of this application.

By way of example but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, for example, smart watches or smart glasses, and include devices that dedicated to only one type of application function and need to work with other devices such as smartphones, for example, various smart bands or smart jewelry for monitoring physical signs.

In embodiments of this application, an apparatus configured to implement a function of the terminal device may be a terminal device, or may be an apparatus that can support the terminal device in implementing the function, for example, a chip system. The apparatus may be installed in the terminal device or used in cooperation with the terminal device. In embodiments of this application, the chip system may include a chip, or may include a chip and another discrete device. In embodiments of this application, an example in which the apparatus configured to implement the function of the terminal device is a terminal device is merely used for description, and constitutes no limitation on the solutions in embodiments of this application.

In embodiments of this application, the network device may be a device configured to communicate with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover any of the following names in a broad sense, or may be replaced with the following names: for example, a NodeB (NodeB), an evolved NodeB (evolved NodeB, eNB), a next generation NodeB (next generation NodeB, gNB), a relay station, an access point, a transmission point (transmitting and receiving point, TRP), a transmitting point (transmitting point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In another example, a helicopter or an uncrewed aerial vehicle may be configured as a device for communicating with another base station.

In some deployments, the network device mentioned in embodiments of this application may be a device including a CU or a DU, a device including a CU and a DU, or a device including a CU control plane (central unit-control plane (central unit-control plane, CU-CP)) node, a CU user plane (central unit-user plane (central unit-user plane, CU-UP)) node, and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes respectively implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more categories of fronthaul interfaces, and different fronthaul interfaces respectively correspond to DUs and RUs that have different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, some downlink and/or uplink baseband functions, for example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, different manners of splitting between the DU and the RU correspond to different categories (categories, Cats) of eCPRIs, for example, eCPRI Cats A, B, C, D, E, and F.

The eCPRI Cat A is used as an example. For downlink transmission, splitting is performed at layer mapping. The DU is configured to implement the layer mapping and one or more functions (to be specific, one or more of encoding, rate matching, scrambling, modulation, and the layer mapping) before the layer mapping, and other functions (for example, one or more of resource element (resource element, RE) mapping, BF, or IFFT/CP) after the layer mapping are moved to the RU for implementation. For uplink transmission, splitting is performed at RE demapping. The DU is configured to implement the demapping and one or more functions (to be specific, one or more of the following functions: decoding, de-rate matching, descrambling, demodulation, inverse discrete Fourier transform (inverse discrete Fourier transform, IDFT), channel equalization, and the RE demapping) before the demapping, and other functions (for example, one or more of digital BF or fast Fourier transform (fast Fourier transform, FFT)/CP removal) after the demapping are moved to the RU for implementation. It may be understood that, for function descriptions of DUs and RUs corresponding to various categories of eCPRIs, refer to the eCPRI protocol. Details are not described herein.

In a possible design, a processing unit configured to implement a baseband function in the BBU is referred to as a baseband high (baseband high, BBH) unit, and a processing unit configured to implement a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by using a software module, a hardware module, or a combination of a software module and a hardware module.

In embodiments of this application, an apparatus configured to implement a function of the network device may be a network device, or an apparatus that can support the network device in implementing the function, for example, a chip system, a hardware circuit, a software module, or a combination of a hardware circuit and a software module. The apparatus may be installed in the network device or used in cooperation with the network device. In embodiments of this application, an example in which the apparatus configured to implement the function of the network device is a network device is merely used for description, and constitutes no limitation on the solutions in embodiments of this application.

The network device and/or the terminal device may be deployed on land, including an indoor device, an outdoor device, a handheld device, or a vehicle-mounted device; may be deployed on water; or may be deployed on an airplane, a balloon, and a satellite in air. A scenario in which the network device and the terminal device are located is not limited in embodiments of this application. In addition, the terminal device and the network device may be hardware devices; may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In a wireless communication network, for example, in a mobile communication network, services supported by the network are increasingly diversified, and therefore, requirements that need to be met are increasingly diversified. For example, the network needs to be capable of supporting an ultra-high rate, an ultra-low delay, and/or massive connections. This feature makes network planning, network configuration, and/or resource scheduling increasingly complex. In addition, because the network has increasingly powerful functions, for example, supports an increasingly high spectrum and supports new technologies such as a higher-order multiple-input multiple-output (multiple-input multiple-output, MIMO) technology, beamforming, and/or beam management, network energy saving becomes a hot research topic. These new requirements, scenarios, and features cause unprecedented challenges to network planning, operation and maintenance, and efficient operation. To address the challenges, an artificial intelligence technology may be introduced into the wireless communication network to implement network intelligence.

To support the AI technology in the wireless network, an AI node may be further introduced into the network.

Optionally, the AI node may be deployed at one or more of the following positions in the communication system: an access network device, a terminal device, a core network device, or the like. Alternatively, the AI node may be independently deployed, for example, deployed at a position other than any one of the foregoing devices, for example, a host or a cloud server in an over the top (over the top, OTT) system. The AI node may communicate with another device in the communication system. The another device may be, for example, one or more of the following: a network device, a terminal device, a network element of a core network, or the like.

It may be understood that a quantity of AI nodes is not limited in embodiments of this application. For example, when there are a plurality of AI nodes, the plurality of AI nodes may be divided based on functions. For example, different AI nodes are responsible for different functions.

It may be further understood that, the AI nodes may be independent devices, may be integrated into a same device to implement different functions, may be network elements in a hardware device, may be software functions running on dedicated hardware, or may be virtualized functions instantiated on a platform (for example, a cloud platform). A specific form of the AI node is not limited in this application. The AI node may be an AI network element or an AI module.

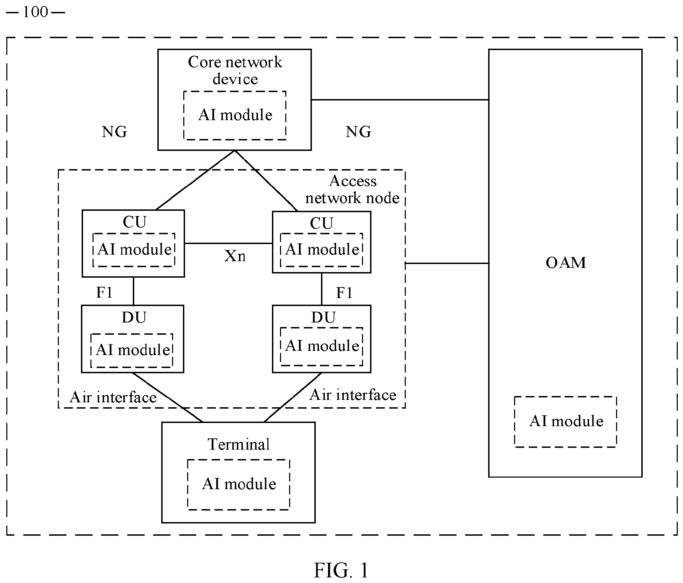

FIG. 1 is a diagram of an application framework 100 in a communication system according to an embodiment of this application. As shown in FIG. 1, network elements in the communication system are connected through an interface (for example, NG or Xn) or an air interface. One or more AI modules (for clarity, FIG. 1 shows only one AI module) are disposed on one or more of these network element nodes, for example, a core network device, an access network node (RAN node), a terminal, or operation administration and maintenance (operation administration and maintenance, OAM). The access network node may serve as an independent RAN node, or may include a plurality of RAN nodes, for example, include a CU and a DU. One or more AI modules may also be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed on different network elements may be the same or different. A model of the AI module is configured based on different parameters, and the AI module may implement different functions. The model of the AI module may be configured based on one or more of the following parameters: a structure parameter (for example, at least one of a quantity of neural network layers, a width of a neural network, a connection relationship between layers, a weight value of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of the neural network.

One AI module may have one or more models. One model may obtain one output through inference, and the output includes one or more parameters. Learning processes, training processes, or inference processes of different models may be deployed on different nodes or devices, or may be deployed on a same node or device.

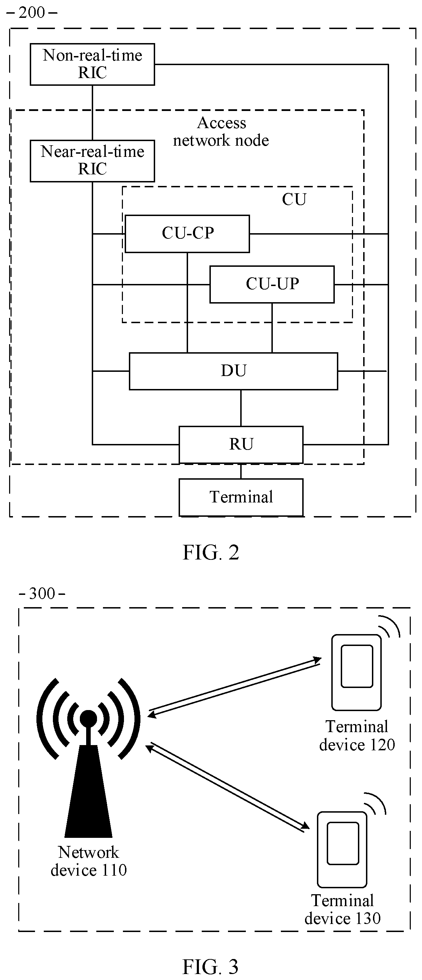

FIG. 2 is a diagram of an application framework 200 in a communication system according to an embodiment of this application. As shown in FIG. 2, the communication system includes a RAN intelligent controller (RAN intelligent controller, RIC). For example, the RIC may be the AI modules shown in FIG. 1, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, delay-insensitive data. A delay of the data may be at a granularity of seconds. The near-real-time RIC mainly processes near-real-time information, for example, delay-sensitive data. A delay of the data is at a granularity of tens of milliseconds.

The near-real-time RIC is configured to perform model training and inference, for example, is configured to train an AI model and perform inference by using the AI model. The near-real-time RIC may obtain information on a network side and/or a terminal side from a RAN node (for example, a CU, a CU-CP, a CU-UP, a DU, and/or an RU) and/or a terminal. The information may serve as training data or inference data. Optionally, the near-real-time RIC may deliver an inference result to the RAN node and/or the terminal. Optionally, the inference result may be exchanged between the CU and the DU and/or between the DU and the RU. For example, the near-real-time RIC delivers the inference result to the DU, and the DU sends the inference result to the RU.

The non-real-time RIC is also configured to perform model training and inference, for example, is configured to train an AI model and perform inference by using the model. The non-real-time RIC may obtain information on a network side and/or a terminal side from a RAN node (for example, a CU, a CU-CP, a CU-UP, a DU, and/or an RU) and/or a terminal. The information may serve as training data or inference data, and an inference result may be delivered to the RAN node and/or the terminal. Optionally, the inference result may be exchanged between the CU and the DU and/or between the DU and the RU. For example, the non-real-time RIC delivers the inference result to the DU, and the DU sends the inference result to the RU.

The near-real-time RIC and the non-real-time RIC each may alternatively be independently disposed as a network element. Optionally, the near-real-time RIC and the non-real-time RIC may alternatively serve as a part of another device. For example, the near-real-time RIC is disposed on the RAN node (for example, the CU or the DU), and the non-real-time RIC is disposed in OAM, a cloud server, a core network device, or another network device.

FIG. 3 is a diagram of a communication system 300 to which an embodiment of this application is applicable. As shown in FIG. 3, the communication system 300 may include at least one network device, for example, a network device 110. The communication system 300 may further include at least one terminal device, for example, a terminal device 120 and a terminal device 130. The network device 110 and the terminal device (for example, the terminal device 120 and the terminal device 130) may communicate with each other through a radio link. Communication devices, for example, the network device 110 and the terminal device 120, in the communication system may communicate with each other by using a multiple-antenna technology.

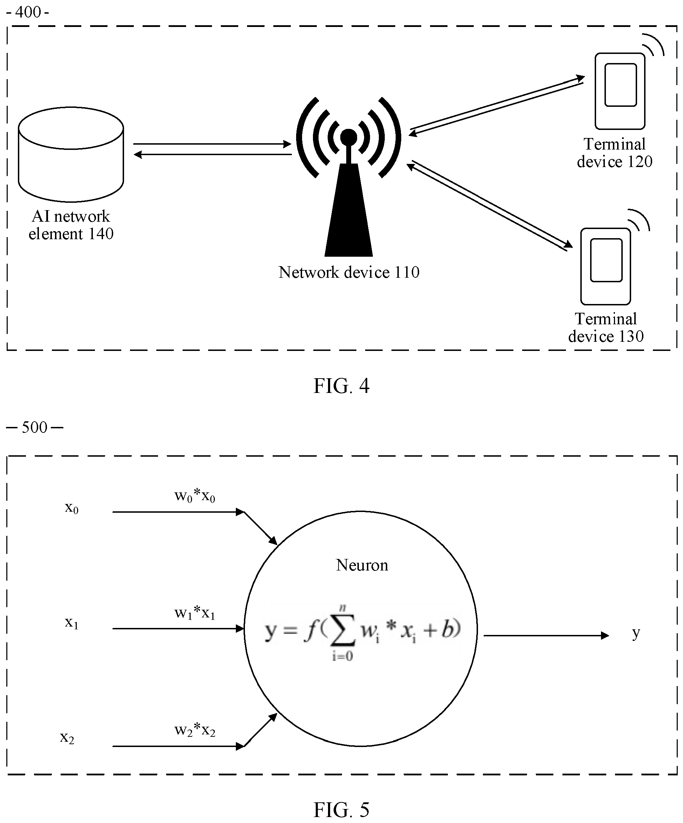

FIG. 4 is a diagram of a communication system 400 to which an embodiment of this application is applicable. In comparison with the communication system 300, the communication system 400 further includes an AI network element 140. The AI network element 140 is configured to perform an AI-related operation, for example, construct a training data set or train an AI model.

In a possible implementation, a network device 110 may send data related to training of the AI model to the AI network element 140, and the AI network element 140 constructs the training data set and trains the AI model. For example, the data related to training of the AI model may include data reported by a terminal device. The AI network element 140 may send a result of an operation related to the AI model to the network device 110, and the network device 110 forwards the result of the operation related to the AI model to the terminal device. For example, the result of the operation related to the AI model may include at least one of the following: a trained AI model, an evaluation result or a test result for the model, and the like. For example, a part of the trained AI model may be deployed on the network device 110, and the other part is deployed on the terminal device. Alternatively, the trained AI model may be deployed on the network device 110. Alternatively, the trained AI model may be deployed on the terminal device.

It should be understood that, in FIG. 4, that the AI network element 140 is directly connected to the network device 110 is used merely as an example for description. In another scenario, the AI network element 140 may alternatively be connected to the terminal device. Alternatively, the AI network element 140 may be connected to both the network device 110 and the terminal device. Alternatively, the AI network element 140 may be connected to the network device 110 via a third-party network element. A connection relationship between the AI network element and another network element is not limited in embodiments of this application.

The AI network element 140 may alternatively be disposed in a network device and/or a terminal device as a module, for example, disposed in the network device 110 or the terminal device shown in FIG. 3.

It should be noted that, FIG. 3 and FIG. 4 are merely simplified diagrams of examples for ease of understanding. For example, the communication system may further include another device, for example, may further include a wireless relay device and/or a wireless backhaul device, which are/is not shown in FIG. 3 and FIG. 4. In actual application, the communication system may include a plurality of network devices (for example, the network device 110 and a network device 150 (not shown in FIG. 3)), or may include a plurality of terminal devices. Quantities of network devices and terminal devices included in the communication system are not limited in embodiments of this application.

Then, some technical concepts in this application are briefly described.

Machine learning (machine learning, ML): ML is an important technical means of implementing AI. ML may be divided into supervised learning, unsupervised learning, and reinforcement learning.

In terms of the supervised learning, based on collected sample values and sample labels, a mapping relationship between the sample values and the sample labels is learned by using an ML algorithm, and the learned mapping relationship is expressed by using an ML model. A process of training an ML model is a process of learning the mapping relationship. For example, during signal detection, a received signal including noise is a sample, and a real constellation point corresponding to the signal is a label. ML expects to learn a mapping relationship between the sample and the label through training, that is, enable an ML model to learn a signal detector. During training, a model parameter is optimized by calculating an error between a predicted value of a model and an actual label. Once the mapping relationship is learned, a sample label of each new sample can be predicted by using the learned mapping. The mapping relationship learned through supervised learning may include linear mapping and non-linear mapping. Learning tasks may be classified into classification tasks and regression tasks based on types of labels.

In terms of the unsupervised learning, based only on a collected sample value, an internal pattern of a sample is explored autonomously by using an algorithm. For a specific type of algorithm of the unsupervised learning, a sample serves a supervised signal. In other words, a model learns a mapping relationship between samples, which is referred to as self-supervised learning. During training, a model parameter is optimized by calculating an error between a predicted value of a model and a sample. The self-supervised learning may be used for signal compression and decompression restoration. Common algorithms include an autoencoder, a generative adversarial network, and the like.

The reinforcement learning is different from the supervised learning, and is an algorithm that learns a strategy of resolving problems by interacting with an environment. Different from the supervised learning and the unsupervised learning, the reinforcement learning does not have clear "correct" action label data. The algorithm needs to interact with the environment to obtain a reward signal fed back by the environment and adjust a decision action to obtain a larger reward signal value. For example, in downlink power control, a reinforcement learning model adjusts a downlink transmit power of each user based on a total system throughput fed back by a wireless network, to expect to obtain a higher system throughput. An objective of the reinforcement learning is also to learn a mapping relationship between an environment status and an optimal decision action. However, a label of "correct action" cannot be obtained in advance. Therefore, a network cannot be optimized by calculating an error between an action and the "correct action". Reinforcement learning training is implemented through iterative interaction with the environment.

A deep neural network (deep neural network, DNN) is a specific implementation form of ML. According to a universal approximation theorem, the neural network can approximate any continuous function in theory, so that the neural network has a capability of learning any mapping. In a conventional communication system, a communication module needs to be designed with rich expert knowledge. However, a DNN-based deep learning communication system can automatically discover an implicit pattern structure from a large quantity of data sets, establish a mapping relationship between data, and obtain performance better than that of a conventional modeling method. For description of the DDN, refer to FIG. 5.

FIG. 5 is a diagram of a neuron structure 500. As shown in FIG. 5, it is assumed that an input of a neuron is $\mathbf{x} = [x_0, \ldots, x_n]$, a weight value corresponding to the input is $w = [w_0, \ldots, w_n]$, and a bias of weighted summation is b. Forms of a non-linear function may be diversified, and an example is a maximum function of $\max\{0, x\}$. In this case, an execution effect of a neuron may be

$$\max\{0, \sum_{i=0}^{n} w_i x_i + b\}.$$

Based on a network construction manner, a DNN may be classified into a feedforward neural network (feedforward neural network, FNN), a convolutional neural network (convolutional neural network, CNN), and a recurrent neural network (recurrent neural network, RNN).

The CNN is a neural network dedicated to processing data with a grid-like structure. For example, both time series data (timeline discrete sampling) and image data (two-dimensional discrete sampling) may be considered as the data with the grid-like structure. The CNN performs a convolution operation by capturing partial information through a window with a fixed size, instead of performing an operation by using all input information at one time. This greatly reduces a calculation amount of a model parameter. In addition, based on different types of information captured through the window (for example, a person and an object in a same image are information of different types), different convolution kernel operations may be used for each window, so that the CNN can better extract a feature of input data.

The RNN is a DNN network using feedback time series information. Inputs of the RNN include a new input value at a current moment and an output value of the RNN at a previous moment. The RNN is suitable for obtaining a sequence feature having a time correlation, and is especially suitable for applications such as speech recognition and channel encoding and decoding.

The foregoing FNN, CNN, and RNN are common neural network structures, and these network structures are constructed based on neurons. As described above, each neuron performs a weighted summation operation on input values of the neuron, and a weighted summation result is passed through a non-linear function to generate an output. In this case, a weight value of the weighted summation operation of the neuron in the neural network and the non-linear function are referred to as parameters of the neural network. A neuron using $\max\{0, x\}$ as a non-linear function is used as an example. Parameters of the neuron that performs a

$$\max\{0, \sum_{i=0}^{n} w_i x_i + b\}$$ operation are a weight va-

lue $\mathbf{w} = [w_0, \ldots, w_n]$, a weighted summation bias b, and the non-linear function $\max\{0, x\}$. Parameters of all neurons in a neural network form parameters of the neural network.

AI model: is an algorithm or a computer program that can implement an AI function, and represents a mapping relationship between an input and an output of the model. A type of the AI model may be a neural network, a linear regression model, a decision tree model, a support vector machine (support vector machine, SVM), a Bayesian network, a Q-learning model, or another ML model.

Two-side model: may also be referred to as a bilateral model, a cooperative model, a dual model, a two-side (two-side) model, or the like. The two-side model is a model formed by combining a plurality of submodels. The plurality of submodels forming the model need to match each other. The plurality of submodels may be deployed on different nodes.

The AI model in embodiments of this application may be a two-side model or a single-side model, and may be deployed on a terminal device and/or a network device.

Model application or inference: is to resolve a practical problem by using a trained model.

AI function: does not specifically indicate a specific AI model, but indicates a type of AI models having a same function, where for example, the AI function may be channel state information (channel state information, CSI) feedback, CSI prediction, beam prediction, positioning, channel estimation, and the like, and in other words, the AI function may correspond to a plurality of AI models.

It may be understood that, the AI model or the AI function may be implemented by using a hardware circuit, software, or a combination of software and hardware. This is not limited. A non-limitative example of the software includes program code, a program, a subprogram, instructions, an instruction set, code, a code segment, a software module, an application program, a software application program, or the like.

In embodiments of this application, an indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured. In addition, in embodiments of this application, that information C is used to determine information D includes that the information D is determined only based on the information C, and also includes that the information D is determined based on the information C and other information. In addition, that the information C is used to determine the information D may further include an indirect determining case. For example, the information D is determined based on information E, and the information E is determined based on the information C.

In addition, that "a network element A (which may be a device A) sends information A to a network element B (which may be a device B)" in embodiments of this application may be understood as that a destination end of the information A or an intermediate network element in a transmission path to the destination end is the network element B, and may include directly or indirectly sending the information to the network element B. That "the network element B receives the information A from the network element A" may be understood as that a source end of the information A or an intermediate network element in a transmission path from the source end is the network element A, and may include directly or indirectly receiving the information from the network element A. Information may undergo necessary processing, for example, a format change, between the source end for sending the information and the destination end. However, the destination end may understand valid information from the source end. Similar descriptions in this application may be understood similarly. Details are not described herein.

As described in the background, when switching is performed, for an AI model, from one scenario to another scenario, to enable the AI model to be used in the newly-switched-to scenario, data of the newly-switched-to scenario may be obtained, and the AI model is updated by using the data of the newly-switched-to scenario, to obtain an updated AI model. The updated AI model can be used in the newly-switched-to scenario. However, the foregoing solution may cause high overheads for model update. For example, updating all parameters of the AI model causes high overheads for update. For another example, obtaining a large amount of data in the newly-switched-to scenario causes high overheads for data storage, and further causes high overheads for model update.

In view of this, this application provides an AI model training method and a communication apparatus, to effectively reduce overall overheads for model update.

For ease of understanding and description, the following uses interaction between a network element 1 and a network element 2 as an example for description. The network element 1 and the network element 2 may correspond to different entities, or may correspond to a same entity. For example, the network element 1 corresponds to an entity 1 (which may be a terminal device, a network device, or a core network device), and the network element 2 corresponds to an entity 2 (which may be a terminal device, a network device, or a core network device). For another example, the network element 1 and the network element 2 correspond to the entity 1. This is not limited.

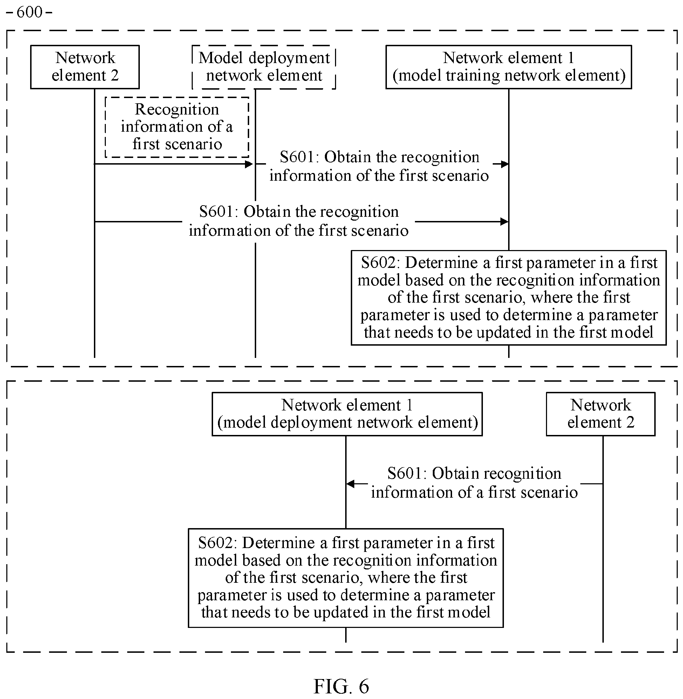

In a possible implementation, the network element 1 may be a model deployment network element or a model training network element, and the network element 2 may include at least one of a scenario recognition network element or a data collection network element (which may also be a data providing network element or another name, which is not limited). For the interaction between the network element 1 and the network element 2, refer to FIG. 6.

FIG. 6 is a diagram of an AI model training method 600 according to an embodiment of this application. As shown in FIG. 6, the method 600 includes the following steps.

S601: A network element 1 obtains recognition information of a first scenario.

For example, as shown in the upper figure of FIG. 6, the network element 1 is a model training network element, and the network element 1 obtains the recognition information of the first scenario from a network element 2. In other words, after determining or obtaining the recognition information of the first scenario, the network element 2 sends the recognition information of the first scenario to the network element 1. In this case, the network element 2 may also be referred to as a scenario recognition network element or a data collection network element.

For example, as shown in the upper figure of FIG. 6, the network element 1 is a model training network element, and the network element 1 obtains the recognition information of the first scenario from a model deployment network element. In other words, after determining or obtaining the recognition information of the first scenario, the network element 2 sends the recognition information of the first scenario to the model deployment network element, and the model deployment network element sends the recognition information of the first scenario to the network element 1.

For example, as shown in the lower figure of FIG. 6, the network element 1 is a model deployment network element, and the network element 1 obtains the recognition information of the first scenario from the network element 2. In other words, after determining or obtaining the recognition information of the first scenario, the network element 2 sends the recognition information of the first scenario to the network element 1.

In a possible implementation, the recognition information of the first scenario may include identification information of the first scenario. For example, an identifier may be configured for each scenario, and the identifier is associated with a feature or a type of the scenario. For example, for an indoor scenario, an identifier 1 is configured; for an outdoor scenario, an identifier 2 is configured; for a factory scenario, an identifier 3 is configured; for a low power consumption scenario, an identifier 4 is configured; for a high power consumption scenario, an identifier 5 is configured; for a scenario with good channel quality, an identifier 6 is configured; for a scenario with poor channel quality, an identifier 7 is configured; for a low delay scenario, an identifier 8 is configured; and for a high delay scenario, an identifier 9 is configured. Identification information of these scenarios may be sensed, obtained, and determined by a sensor device (for example, a network device, a terminal device, and a camera). For example, the network device or the terminal device may determine feature information of a current scenario by using a reference signal measurement result, determine identification information of the current scenario based on an association between feature information of a scenario and identification information of the scenario, and report the identification information of the current scenario.

In another possible implementation, the recognition information of the first scenario may include feature information of the first scenario. For example, each scenario may have a unique scenario feature.

For example, for an indoor scenario, the indoor scenario includes feature information 1, and the feature information 1 includes one or more of the following features: A delay spread of a reference signal channel measurement result in this scenario is lower than a first threshold (where the first threshold is preconfigured or predefined), a Doppler shift of the reference signal channel measurement result in this scenario is lower than a second threshold (where the second threshold is preconfigured or predefined), a corresponding network device indicates that the current scenario is located indoors, a corresponding terminal device determines, based on a positioning result of the terminal device, that the current scenario is located indoors, and a sensor device (for example, a camera) senses that the current scenario is an indoor scenario.

For example, for an outdoor scenario, the outdoor scenario includes feature information 2, and the feature information 2 includes one or more of the following features: A delay spread of a reference signal channel measurement result in this scenario is higher than a third threshold (where the third threshold is preconfigured or predefined), a Doppler shift of the reference signal channel measurement result in this scenario is higher than a fourth threshold (where the fourth threshold is preconfigured or predefined), a corresponding network device indicates that the current scenario is located outdoors, a corresponding terminal device determines, based on a positioning result of the terminal device, that the current scenario is located outdoors, and a sensor device (for example, a camera) senses that the current scenario is an outdoor scenario.

For example, for a factory scenario, the factory scenario includes feature information 3, and the feature information 3 includes one or more of the following features: A delay spread of a reference signal channel measurement result in this scenario is lower than a fifth threshold (where the fifth threshold is preconfigured or predefined), a Doppler shift of the reference signal channel measurement result in this scenario is lower than a sixth threshold (where the sixth threshold is preconfigured or predefined), a corresponding network device indicates that the current scenario is located in a factory, a corresponding terminal device determines, based on a positioning result of the terminal device, that the current scenario is located in the factory, and a sensor device (for example, a camera) senses that the current scenario is a factory scenario.

For example, for a scenario with good channel quality, the scenario with good channel quality includes feature information 4, and the feature information 4 includes one or more of the following features: A signal to interference plus noise ratio (signal to interference plus noise ratio, SINR) of a reference signal channel measurement result in this scenario is higher than a seventh threshold (where the seventh threshold is preconfigured or predefined), and an interference level of the reference signal channel measurement result in this scenario is lower than an eighth threshold (where the eighth threshold is preconfigured or predefined).

For example, for a scenario with poor channel quality, the scenario with poor channel quality includes feature information 5, and the feature information 5 includes one or more of the following features: An SINR of a reference signal channel measurement result in this scenario is lower than a ninth threshold (where the ninth threshold is preconfigured or predefined), and an interference level of the reference signal channel measurement result in this scenario is higher than a tenth threshold (where the tenth threshold is preconfigured or predefined). The foregoing 10 thresholds may be different, or may be partially the same. This is not limited.

The feature information of these scenarios may be sensed, obtained, and reported by a sensor device, and the network element 1 determines the identification information of the current scenario based on an association between feature information of a scenario and identification information of the scenario.

In the foregoing description, the network element 2 may be a network element or an entity that has a function of sensing and obtaining recognition information (for example, identification information or feature information) of the current scenario, for example, a network device, a terminal device, or a sensing device different from the network device or the terminal device. The sensing device may communicate with at least one of the network device or the terminal device.

S602: The network element 1 determines a first parameter in a first model based on the recognition information of the first scenario, where the first parameter is used to determine a parameter that needs to be updated in the first model.

The first model may support (or the first model currently supports) a plurality of scenarios. For example, the first model may support scenarios such as a second scenario and a third scenario. For ease of description, the scenario supported by the first model may be referred to as a historical scenario. For example, the second scenario and the third scenario may be collectively referred to as historical scenarios. A quantity of historical scenarios supported by the first model is not limited. There may be one or more historical scenarios. A quantity of historical scenarios supported by the first model may be updated or changed (for example, deleted or added, which is not limited). In addition, the historical scenario may alternatively be a scenario in which a function corresponding to the first model provides a service. For example, a scenario in which the first model can be specifically used may be a historical scenario.

In a possible implementation, the first scenario is not the scenario currently supported by the first model. In this way, the parameter that needs to be updated in the first model may be updated, so that an updated first model can support the first scenario.

In another possible implementation, the first scenario is the scenario currently supported by the first model. For example, the first scenario is a scenario in the historical scenarios. In this case, the parameter that needs to be updated in the first model may also be updated, so that a function of the updated first model is stronger.

The network element 1 may determine, based on the recognition information of the first scenario, the parameter that needs to be updated in the first model. The parameter that needs to be updated in the first model may not include all parameters in the first model, that is, may include all or a part of parameters in the first model. The first parameter can be used to determine the parameter that needs to be updated in the first model.

In a possible implementation, the parameter that needs to be updated in the first model is the first parameter. Refer to Table 1. When the parameter that needs to be updated in the first model is the first parameter, directly determining the parameter that needs to be updated in the first model is supported in this application. Content shown in Table 1 is merely used as an example for understanding, and is not used as a final limitation.

Table 1

| Scenario | Parameter |
|---|---|
| Scenario 1 | Parameter 1 |
| Scenario 2 | Parameter 2 |
| Scenario 3 | Parameter 3 |

As shown in Table 1, three scenarios and three parameters (for example, the first model includes three parameters in total) are used as an example for description. For example, the scenario 1 corresponds to the parameter 1, the scenario 2 corresponds to the parameter 2, and the scenario 3 corresponds to the parameter 3. For example, for the scenario 1, the parameter 1 in the first model is a parameter that needs to be updated; for the scenario 2, the parameter 2 in the first model is a parameter that needs to be updated; and for the scenario 3, the parameter 3 in the first model is a parameter that needs to be updated. In this application, establishment of an association relationship between a scenario and a parameter in the first model is supported, and the association relationship between the scenario and the parameter in the first model is stored, configured, or predefined in the network element 1. In this way, signaling overheads used for exchanging the association relationship between the scenario and the parameter in the first model can be reduced.

In conclusion, association relationships between a plurality of different scenarios and parameters in the first model are set, and the first parameter associated with the first scenario is determined based on the recognition information of the first scenario and at least one association relationship. In this way, the parameter that needs to be updated in the first model can be determined.

The parameter 1, the parameter 2, and the parameter 3 may be understood as parameters such as w and b in FIG. 5.

With reference to the content shown in Table 1, the recognition information of the first scenario can indicate the scenario 1, and the first parameter may be the parameter 1.

In another possible implementation, the parameter that needs to be updated in the first model is a part or all of parameters in the first model other than the first parameter. Refer to Table 2. When the parameter that needs to be updated in the first model is a part or all of parameters in the first model other than the first parameter, using low signaling overheads to indicate the parameter that needs to be updated in the first model is supported in this application. Content shown in Table 2 is merely used as an example for understanding, and is not used as a final limitation.

Table 2

| Scenario | Parameter |
|---|---|
| Scenario 1 | Parameter 2 and parameter 3 |
| Scenario 2 | Parameter 1 and parameter 3 |
| Scenario 3 | Parameter 1 and parameter 2 |

As shown in Table 2, three scenarios and three parameters (for example, the first model includes three parameters in total) are used as an example for description. For example, the scenario 1 corresponds to the parameter 2 and the parameter 3, the scenario 2 corresponds to the parameter 1 and the parameter 3, and the scenario 3 corresponds to the parameter 1 and the parameter 2. For example, for the scenario 1, the parameter 1 in the first model is a parameter that does not need to be updated; for the scenario 2, the parameter 2 in the first model is a parameter that does not need to be updated; and for the scenario 3, the parameter 3 in the first model is a parameter that does not need to be updated. In this application, establishment of an association relationship between a scenario and a parameter in the first model is supported, and the association relationship between the scenario and the parameter in the first model is stored, configured, or predefined in the network element 1. In this way, the network element 1 may determine the first parameter based on the association relationship between the scenario and the parameter in the first model and the recognition information of the first scenario.

With reference to the content shown in Table 2, the recognition information of the first scenario can indicate the scenario 1, and the first parameter may be the parameter 1.

In conclusion, the network element 1 determines, based on recognition information of a scenario, the parameter that needs to be updated in the first model, so that model update is performed on the parameter that needs to be updated in the first model, and there is no need to update all parameters in the first model. In this way, overall overheads for model update can be effectively reduced.

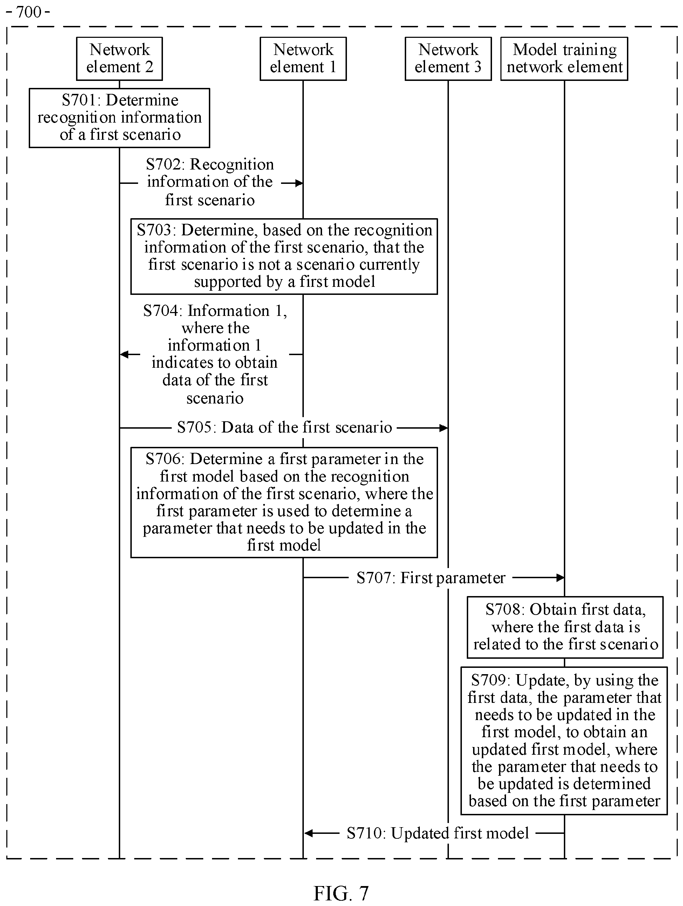

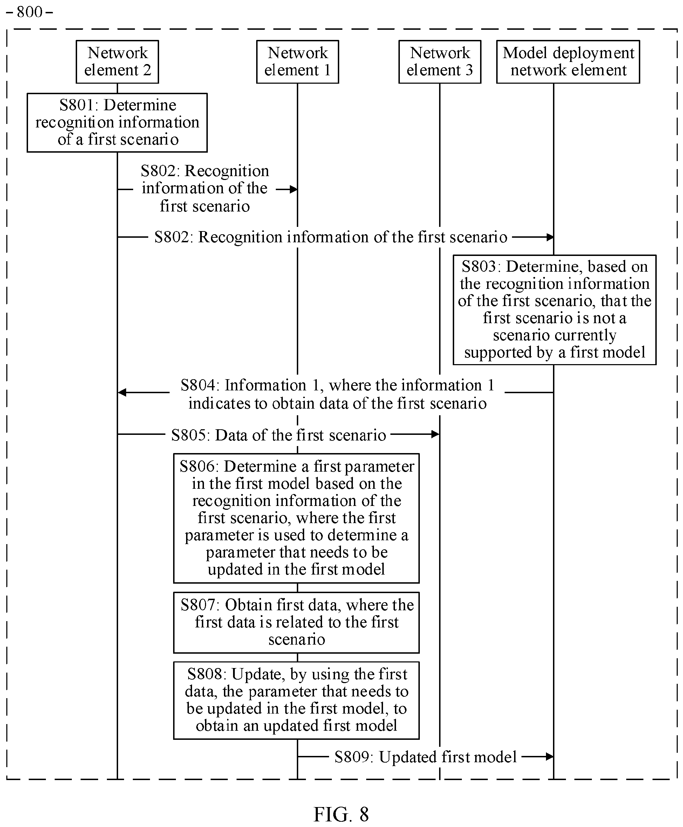

The following further describes the method shown in FIG. 6 with reference to FIG. 7 and FIG. 8.

For ease of understanding and description, the following uses interaction between a network element 1, a network element 2, and a network element 3 as an example for description. The network element 1, the network element 2, and the network element 3 may respectively correspond to different entities, that is, the network element 1, the network element 2, and the network element 3 are different entities, or may correspond to a same entity or a plurality of entities, that is, all or a part of the network element 1, the network element 2, and the network element 3 belong to a same entity. For example, the network element 1 corresponds to an entity 1 (which may be a terminal device, a network device, or a core network device), the network element 2 corresponds to an entity 2 (which may be a terminal device, a network device, or a core network device), and the network element 3 corresponds to an entity 3 (which may be a terminal device, a network device, or a core network device). For another example, the network element 1 and the network element 2 correspond to the entity 1, and the network element 3 corresponds to the entity 2. For another example, the network element 1 and the network element 3 correspond to the entity 1, and the network element 2 corresponds to the entity 2. This is not limited. The network element 3 may be referred to as a data storage/generation network element in terms of functions. When having a data generation function, the network element 3 may include a data generator, and is referred to as a data generation network element. When being used for data storage, the network element 3 may also be referred to as a data storage network element.

FIG. 7 is a diagram of an interaction procedure of an AI model training method 700 according to an embodiment of this application. As shown in FIG. 7, an example in which a network element 1 is a model deployment network element is used. The method 700 includes the following steps.

S701: A network element 2 determines recognition information of a first scenario.

The network element 2 may be a network element or an entity that has a function of sensing and obtaining recognition information (for example, identification information or feature information) of a current scenario, for example, a network device, a terminal device, or a sensing device different from the network device or the terminal device. The sensing device may communicate with at least one of the network device or the terminal device. In this case, the network element 2 may be referred to as a scenario recognition network element.

That the network element 2 determines the recognition information of the first scenario may include: The network element 2 obtains the recognition information of the first scenario or the network element 2 senses the recognition information of the first scenario. This is not limited.

In an example, the network element 2 performs scenario recognition by using a reference signal measurement result or a sensing result of one or more of a camera, a radar, or a base station, and determines the recognition information of the first scenario. A specific manner in which the network element 2 determines the recognition information of the first scenario is not limited.

S702: The network element 2 sends the recognition information of the first scenario to the network element 1.

Correspondingly, the network element 1 receives the recognition information of the first scenario.

The network element 2 reports the recognition information of the first scenario, so that another network element (for example, the network element 1) can determine, based on the recognition information of the first scenario, whether update training on a first model needs to be started and whether a collection procedure for data of the first scenario needs to be started, thereby supporting effective reduction of overall overheads for model update.

S703: The network element 1 determines, based on the recognition information of the first scenario, that the first scenario is not a scenario currently supported by the first model.

For example, the network element 1 may store or be configured with recognition information of a scenario supported by the first model.

After obtaining the recognition information of the first scenario, the network element 1 may determine whether the first scenario is the scenario currently supported by the first model. For ease of description, the following uses an example in which the network element 1 determines that the first scenario is not the scenario currently supported by the first model for description. However, there is a possible example in which the first scenario may alternatively be the scenario currently supported by the first model. When it is determined, based on the recognition information of the first scenario, that the first scenario is not the scenario currently supported by the first model, in this application, the collection procedure for the data of the first scenario may be started, and the data related to the first scenario is used to perform update training on a parameter that needs to be updated in the first model, so that an updated first model can be used in the first scenario.

S704: The network element 1 sends information 1 to a data collection network element, for example, the network element 2, where the information 1 indicates to obtain the data of the first scenario.

Correspondingly, the data collection network element, for example, the network element 2, receives the information 1, and obtains the data of the first scenario based on the information 1. The data of the first scenario can be used to update the first model. In this way, the data of the first scenario can be obtained, so that update training can be performed on the first model by using the data of the first scenario. The data collection network element may alternatively be another network element different from a scenario recognition network element, for example, the network element 2. Optionally, the scenario recognition network element may determine, based on data from the data collection network element, the recognition information of the first scenario corresponding to the data.

In addition, the network element 1 determines, based on recognition information of a scenario, whether the data of the first scenario needs to be obtained. This helps avoid repeated data collection. In addition, when determining that the data of the first scenario needs to be obtained, the network element 1 may indicate to obtain the data of the first scenario, and may perform update training on the first model by using the data of the first scenario, so that an updated first model can be used in the first scenario.

In addition, according to the foregoing solution, in this application, a case in which update training is performed on the first model when update training does not need to be performed on the first model can be further avoided, thereby effectively reducing the overall overheads for the model update.

S705: The data collection network element, for example, the network element 2, sends the data of the first scenario to a network element 3.

Correspondingly, the network element 3 receives the data of the first scenario. The network element 3 may be a data storage network element, and the data storage network element stores the data of the first scenario. The network element 3 may be a data generation network element, and the data generation network element may extract a data feature of the first scenario, and update data stored in the data generation network element.

Optionally, the data collection network element, for example, the network element 2, may send the data of the first scenario to a model training network element. This is not limited.

S706: The network element 1 determines a first parameter in the first model based on the recognition information of the first scenario, where the first parameter is used to determine the parameter that needs to be updated in the first model.

For descriptions of S706, refer to S602. Details are not described again.

S707: The network element 1 sends the first parameter to the model training network element.

Correspondingly, the model training network element receives the first parameter, and determines, based on the first parameter, the parameter that needs to be updated in the first model. In this way, another network element can determine the parameter that needs to be updated in the first model.

S708: The model training network element obtains first data, where the first data is related to the first scenario.

In a possible implementation, the first data may include any one of the following:

the data of the first scenario, the data of the first scenario and data of a scenario related to the first scenario, or data obtained through data generation based on the data of the first scenario and a data feature of second data, where the second data is data of the scenario currently supported by the first model, the scenario related to the first scenario is the scenario currently supported by the first model, and these scenarios may also be referred to as historical scenarios in comparison with the first scenario. Based on one or more of the items enumerated above, completion of update training on the parameter that needs to be updated in the first model is supported in this application, so that an updated first model can be used in the first scenario. Optionally, the updated first model may be further used in the foregoing historical scenario.

When the first data is the data of the first scenario, the model training network element obtains the first data from the network element 2, or may obtain the first data from the data storage network element (an example of the network element 3).

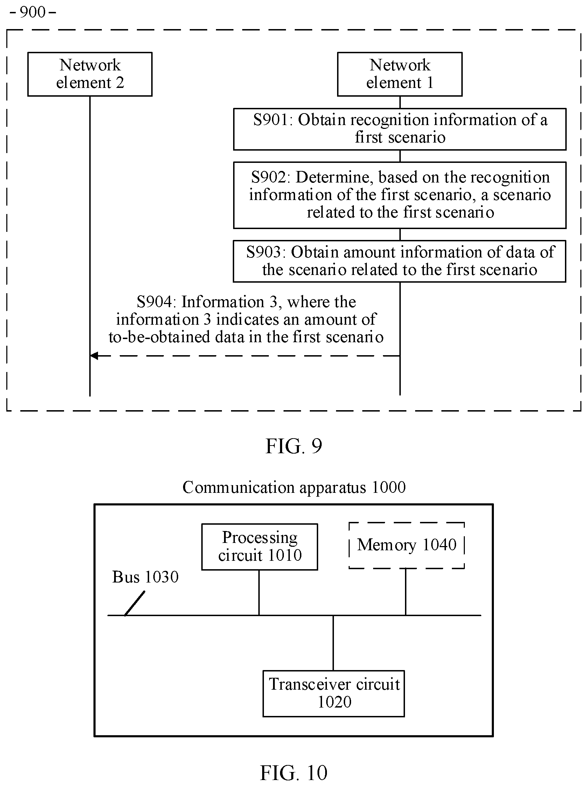

When the first data is the data of the first scenario and the data of the scenario related to the first scenario, the model training network element obtains the first data from the data storage network element. For descriptions of obtaining, by the model training network element, the first data from a data storage/generation network element (the network element 3, for example, the data storage network element), refer to FIG. 9. For descriptions of the scenario related to the first scenario, refer to FIG. 9.

When the first data is the data obtained through data generation by the data storage/generation network element based on the data of the first scenario and the data feature of the second data, the model training network element may obtain the first data from the data storage/generation network element (the network element 3, for example, the data generation network element).

In conclusion, obtaining, in one or more of a plurality of ways, data used to perform update training on the parameter that needs to be updated in the first model is supported in this application.

Further, that the data generation network element performs data generation based on the data of the first scenario and the data feature of the second data, to obtain the first data includes the following steps.

S1: The data generation network element obtains the data of the first scenario from the network element 2.

S2: The data generation network element performs data generation based on the data of the first scenario and the data feature of the second data, to obtain the first data.

The data generation network element may perform data generation by using a generative adversarial network (generative adversarial network, GAN) and based on the data of the first scenario and the data feature of the second data, to obtain the first data. The GAN is a typical unsupervised learning method, and can automatically extract a data feature to complete data generation. The GAN includes two parts: a generator (generating data through a neural network), where a purpose of generation is to generate data similar to original data as much as possible to deceive a discriminator; and the discriminator (determining whether data is real or machine-generated through a neural network), where a purpose of discrimination is to find "false data" made by the generator.

For example, after the data generation network element obtains data of a scenario 1 (where the scenario 1 may be an initial scenario), the data generation network element extracts a data feature of the scenario 1 and generates new data. After the data generation network element obtains data of a scenario 2, the data generation network element extracts the data feature of the scenario 1 and a data feature of the scenario 2, and generates new data. After the data generation network element obtains data of a scenario 3, the data generation network element extracts the data feature of the scenario 1, the data feature of the scenario 2, and a data feature of the scenario 3, and generates new data. Therefore, data that has been obtained or stored by the data generation network element before the data generation network element obtains the data of the first scenario may be collectively referred to as the second data. The data generation network element extracts the data feature of the second data and the data feature of the first scenario, and generates the first data. In this way, an updated AI model can also support a historical scenario before the first scenario.

The first data is generated based on the data of the first scenario and the data feature of the second data, and there is no need to obtain a large amount of data in the first scenario. In this case, that the updated first model can be used in the first scenario and the scenario supported before model update can be supported in this application. This can effectively reduce overheads for data collection, thereby effectively reducing the overall overheads for the model update.

In a possible implementation, the data feature of the second data includes any one of the following:

a signal-to-noise ratio (signal-to-noise ratio, SNR), a signal to interference plus noise ratio (signal to interference plus noise ratio, SINR), a reference signal received power (reference signal received power, RSRP), or a data distribution status.

The data distribution status may include one or more of the following cases: hidden variable variational probability distribution obtained through variational inference performed on data, probability distribution obtained through fitting performed on data by using a Gaussian mixture model, and potential distribution obtained through adversarial process learning performed on data. In this way, based on one or more of the parameters enumerated above, the data generation network element may generate a large amount of data that can be used to update the first model.

S709: The model training network element updates, by using the first data, the parameter that needs to be updated in the first model, to obtain an updated first model.

The parameter that needs to be updated in the first model is determined based on the first parameter (S707) received from the network element 1. In other words, the first parameter is used to determine the parameter that needs to be updated in the first model.

For descriptions of updating, by the model training network element, the parameter that needs to be updated in the first model, refer to an existing solution. Details are not described. Because the first data is related to the first scenario, the model training network element updates the first model by using the first data, and the updated first model can support the first scenario.

S710: The model training network element sends the updated first model to the network element 1.

Correspondingly, the network element 1 receives the updated first model.

The network element 1 may perform inference on the first scenario by using the updated first model. For specific descriptions, refer to an existing solution. Details are not described.

According to the foregoing solution, in this application, reduction of the overall overheads for the model update is supported, and the updated AI model can also support a previous historical scenario, that is, an inference capability for the historical scenario can be maintained (for example, the inference capability for the historical scenario can be maintained by updating a part of parameters or performing model update by using data of the historical scenario).

Content shown in FIG. 7 is described by using an example in which the model deployment network element sends the first parameter to the model training network element. The model training network element may alternatively determine the first parameter. Refer to descriptions in FIG. 8.

FIG. 8 is a diagram of an interaction procedure of an AI model training method 800 according to an embodiment of this application. As shown in FIG. 8, an example in which a network element 1 is a model training network element is used. The method 800 includes the following steps.

S801: A network element 2 determines recognition information of a first scenario.

For descriptions of S801, refer to S701. Details are not described again.

S802: The network element 2 sends the recognition information of the first scenario to a model deployment network element and the network element 1.

Correspondingly, the model deployment network element and the network element 1 separately receive the recognition information of the first scenario.

For descriptions of S802, refer to S702. Details are not described again.

S803: The model deployment network element determines, based on the recognition information of the first scenario, that the first scenario is not a scenario currently supported by a first model.

For descriptions of S803, refer to S703. Details are not described again.

S804: The model deployment network element sends information 1 to a data collection network element, for example, the network element 2, where the information 1 indicates to obtain data of the first scenario.

For descriptions of S804, refer to S704. Details are not described again.

S805: The data collection network element, for example, the network element 2, sends the data of the first scenario to a network element 3.

Correspondingly, the network element 3 receives the data of the first scenario.

For descriptions of S805, refer to S705. Details are not described again.

S806: The network element 1 determines a first parameter in the first model based on the recognition information of the first scenario, where the first parameter is used to determine a parameter that needs to be updated in the first model.

For descriptions of S806, refer to S602. Details are not described again.

The parameter that needs to be updated in the first model is the first parameter.

S807: The network element 1 obtains first data, where the first data is related to the first scenario.

For descriptions of S807, refer to S708. Details are not described again.

S808: The network element 1 updates, by using the first data, the parameter that needs to be updated in the first model, to obtain an updated first model.

For descriptions of S808, refer to S709. Details are not described again.

S809: The network element 1 sends the updated first model to the model deployment network element.

Correspondingly, the model deployment network element receives the updated first model.

The model deployment network element may perform inference on the first scenario by using the updated first model. For specific descriptions, refer to an existing solution. Details are not described.

According to the foregoing solution, in this application, reduction of overall overheads for model update is supported, and the updated AI model can also support a previous historical scenario, that is, an inference capability for the historical scenario can be maintained.

Content shown in FIG. 7 and FIG. 8 is described by using an example in which the model deployment network element sends the information 1 to the data collection network element, for example, the network element 2, that is, indicates to obtain the data of the first scenario. The model training network element may alternatively send, to the data collection network element, for example, the network element 2, information indicating to obtain the data of the first scenario. For example, the information indicating to obtain the data of the first scenario indicates to obtain the data of the first scenario and indicates an amount of data that needs to be obtained. In this case, the information 1 may not be sent. Alternatively, the model deployment network element sends, to the data collection network element, for example, the network element 2, both the information 1 and the information indicating to obtain the data of the first scenario. For example, the information indicating to obtain the data of the first scenario specifically indicates the amount of the data that needs to be obtained. For a procedure in which the model training network element sends, to the data collection network element, for example, the network element 2, the information indicating to obtain the data of the first scenario, refer to descriptions in FIG. 9.

FIG. 9 is a diagram of an interaction procedure of an AI model training method 900 according to an embodiment of this application. As shown in FIG. 9, an example in which a network element 1 is a model training network element or a model deployment network element, and a network element 3 is a data storage network element is used. The method 900 includes the following steps.

S901: The network element 1 obtains recognition information of a first scenario.

For descriptions of S901, refer to S601. Details are not described again.

S902: The network element 1 determines, based on the recognition information of the first scenario, a scenario related to the first scenario, where the scenario related to the first scenario is a scenario currently supported by a first model.

For example, the scenario related to the first scenario may be a scenario having a data feature the same as or similar to that of the first scenario, a scenario of a same type as the first scenario, or a scenario having a scenario feature similar to or the same as that of the first scenario. For descriptions of a scenario feature of a scenario, refer to the related descriptions in S601. Details are not described again. For descriptions of a data feature, refer to the foregoing descriptions of the data feature of the second data. Details are not described again.

In a possible implementation, the network element 1 may determine, according to a predefined rule, the scenario related to the first scenario, or the network element 1 may determine, based on feature information of a scenario, specific feature information corresponding to the scenario related to the first scenario. In this way, the scenario related to the first scenario can be determined.

For example, the predefined rule may be as follows: If feature information of scenario features of two scenarios is consistent or similar, the two scenarios may be considered as related scenarios. "Similar" means that all the feature information meets a same condition, for example, all the feature information is lower than a threshold or higher than a threshold. Alternatively, "similar" means that a difference between the feature information is lower than a threshold. A specific threshold and/or specific feature information may be predefined or preconfigured. This is not limited herein.

For example, a scenario 1 includes feature information 1, and the feature information 1 includes the following feature: A delay spread of a reference signal channel measurement result in this scenario is lower than a first threshold. The first scenario includes feature information 2, and the feature information 2 includes the following feature: A delay spread of a reference signal channel measurement result in this scenario is lower than the first threshold. Correspondingly, the scenario 1 and the first scenario are two related scenarios. For another example, the predefined rule may be as follows: If data features of scenario features of two scenarios are consistent or similar, the two scenarios may be considered as related scenarios. "Similar" means that all the data features meet a same condition, for example, all the data features are lower than a threshold or higher than a threshold. Alternatively, "similar" means that a difference between the data features is lower than a threshold. A specific threshold and/or data feature may be predefined or preconfigured. This is not limited herein.

For example, the scenario 1 includes a data feature 1, and the data feature 1 includes the following feature: A reference signal received power in the scenario 1 is lower than a threshold 1. The first scenario includes a data feature 2, and the data feature 2 includes the following feature: A reference signal received power in the first scenario is lower than the threshold 1. Correspondingly, the scenario 1 and the first scenario are two related scenarios.

For another example, the predefined rule may be as follows: If scenario categories of two scenarios are a same category, and a classification rule is predefined or preconfigured, the two scenarios may be considered as related scenarios.

For example, the scenario 1 is an indoor scenario, and the first scenario is also an indoor scenario. Correspondingly, the scenario 1 and the first scenario are two related scenarios.

S903: The network element 1 obtains amount information of data of the scenario related to the first scenario.

The network element 1 may send information 2 to the network element 3 (which may be a data storage network element). The information 2 indicates to obtain information about the scenario related to the first scenario. For example, the information 2 includes identification information of the scenario related to the first scenario. The network element 3 may determine, based on the identification information of the scenario related to the first scenario, at least one of the data of the scenario related to the first scenario or the amount information of the data of the scenario related to the first scenario. Configuring an association relationship between a scenario and data of the scenario in the network element 3 is supported in this application. Refer to Table 3. Content shown in Table 3 is merely used as an example for understanding, and is not used as a final limitation.

Table 3

| Scenario | Parameter |
| --- | --- |
| Scenario 1 | Data 1 |
| Scenario 2 | Data 2 |
| Scenario 3 | Data 3 |

As shown in Table 3, the scenario 1 corresponds to the data 1, the scenario 2 corresponds to the data 2, and the scenario 3 corresponds to the data 3. Establishment of an association relationship between a scenario and data is supported in this application, and the association relationship between the scenario and the data is stored or configured in the network element 3. The network element 3 may determine corresponding data based on the association relationship between the scenario and the data and identification information of the scenario. In this way, signaling overheads used for exchanging an association relationship between a scenario and data of the scenario can be reduced.

Optionally, when the network element 1 is a model training network element, the network element 3 may send the data of the scenario related to the first scenario, so that the data of the scenario related to the first scenario can be used for update training on the first model. This can effectively use stored data, and can reduce an amount of data that needs to be obtained from the first scenario, thereby effectively reducing overheads for data collection, and further supporting reduction of overall overheads for model update.

In conclusion, the scenario related to the first scenario is determined based on the recognition information of the first scenario, and the data of the scenario related to the first scenario is obtained. This helps reduce the amount of the data that needs to be obtained from the first scenario, thereby reducing the overheads for the data collection, and further reducing the overall overheads for the model update.

Optionally, when the network element 1 is a model training network element, the network element 1 may alternatively obtain data of the first scenario from the network element 3 or a data collection network element, for example, a network element 2, update, by using the data of the first scenario and the data of the scenario related to the first scenario, a parameter that needs to be updated in the first model, to obtain an updated first model, and may send the updated first model to a model deployment network element.

In a possible implementation, amount information of the data of the first scenario may be implicitly obtained when the data of the first scenario is obtained. Therefore, when the network element 1 is a model training network element, obtaining the amount information of the data of the first scenario in S903 may be replaced with obtaining the data of the first scenario.

Optionally, the method 900 may further include the following steps.

S904: The network element 1 sends information 3 to the data collection network element, for example, the network element 2, where the information 3 indicates an amount of to-be-obtained data in the first scenario.

Specifically, when the network element 1 determines, based on the recognition information of the first scenario, that the first scenario is not the scenario currently supported by the first model, the network element 1 sends the information 3 to the data collection network element, for example, the network element 2, to indicate the amount of the to-be-obtained data in the first scenario. The amount of the to-be-obtained data in the first scenario may be determined by the network element 1 based on the amount information of the data of the scenario related to the first scenario. For example, the network element 1 interacts with the network element 3 to determine whether the network element 3 has stored the data of the scenario related to the first scenario. For example, the network element 1 sends, to the network element 3, query information carrying the identification information of the scenario related to the first scenario, and the network element 3 queries, based on the query information, whether the data of the scenario related to the first scenario has been stored. When the network element 1 determines that the data of the scenario related to the first scenario has been stored, the network element 1 determines that there is no need to obtain a large amount of data in the first scenario. In this way, the amount of the data that needs to be obtained from the first scenario may be indicated.

The information 3 may further indicate to obtain the data of the first scenario. In this way, the data of the first scenario can be obtained.

Correspondingly, the data collection network element, for example, the network element 2, may start a collection procedure for the data of the first scenario based on the information 3. According to the foregoing embodiments, effective reduction of the overall overheads for the model update can be supported in this application. Signaling exchange between different network elements in the foregoing method embodiments can support effective reduction of the overall overheads for the model update.

Finally, apparatus embodiments in embodiments of this application are described.

To implement functions in the methods provided in this application, both a terminal device and a network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

FIG. 10 is a block diagram of a communication apparatus 1000 according to an embodiment of this application. The communication apparatus 1000 includes a processing circuit 1010 and a transceiver circuit 1020. The processing circuit 1010 and the transceiver circuit 1020 may be connected to each other through a bus 1030. The communication apparatus 1000 may include one or more of a network element 1, a network element 2, or a network element 3. In other words, the communication apparatus 1000 may include one or more of a data collection network element (for example, the network element 2), a scenario recognition network element (for example, the network element 2), a model training network element (for example, the network element 1), a data storage/generation network element (for example, the network element 3), a model deployment network element (for example, the network element 1), or the like.

Optionally, the communication apparatus 1000 may further include a memory 1040. The memory 1040 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1040 is configured to store related instructions and data.

The processing circuit 1010 may be one or more central processing circuits (central processing units, CPUs). When the processing circuit 1010 is one CPU, the CPU may be a single-core CPU or a multi-core CPU. The processing circuit 1010 may be a signal processor, a chip, another integrated circuit that can implement the methods in this application, or a part of circuits that are in the foregoing processor, chip, or integrated circuit and that are configured to perform a processing function. In addition, the transceiver circuit 1020 may alternatively be a transceiver or an input/output interface. The input/output interface is configured to input or output a signal or data, and may also be referred to as an input/output circuit.

When the communication apparatus 1000 is the network element 1, for example, the processing circuit 1010 is configured to perform the following operations: obtaining recognition information of a first scenario; determining a first parameter in a first model based on the recognition information of the first scenario; and the like.

When the communication apparatus 1000 is the network element 2, for example, the processing circuit 1010 is configured to perform the following operations: determining recognition information of a first scenario; sending the recognition information of the first scenario; and the like.

When the communication apparatus 1000 is the network element 3, for example, the processing circuit 1010 is configured to perform the following operations: receiving information 2 or information 3, sending first data to a model training network element, and the like.

The foregoing content is merely used as an example for description. When the communication apparatus 1000 is the network element 1, the network element 2, or the network element 3, the communication apparatus 1000 is responsible for performing the methods or the steps related to the network element 1, the network element 2, or the network element 3 in the foregoing method embodiments.

It may be understood that, when the communication apparatus 1000 is the network element 1, the network element 2, or the network element 3, the transceiver circuit 1020 is a transceiver. When the communication apparatus 1000 is a chip used for the network element 1, the network element 2, or the network element 3, the transceiver circuit 1020 is an input/output circuit. The foregoing descriptions are merely examples for description. For specific content, refer to the content shown in the method embodiments. For implementations of the operations in FIG. 10, refer to the corresponding descriptions of the method embodiments shown in FIG. 6 to FIG. 9.

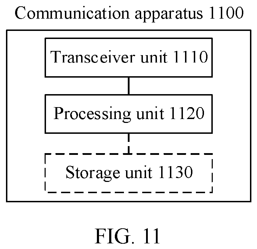

FIG. 11 is a block diagram of a communication apparatus 1100 according to an embodiment of this application. The communication apparatus 1100 may include one or more of a network element 1, a network element 2, or a network element 3, or may be a chip or a module including one or more of the network element 1, the network element 2, or the network element 3. In other words, the communication apparatus 1100 may include one or more of a data collection network element (for example, the network element 2), a scenario recognition network element (for example, the network element 2), a model training network element (for example, the network element 1), a data storage network element (for example, the network element 3), a model deployment network element (for example, the network element 1), or the like, or may be a chip or a module including one or more of the data collection network element (for example, the network element 2), the scenario recognition network element (for example, the network element 2), the model training network element (for example, the network element 1), a data storage/generation network element (for example, the network element 3), the model deployment network element (for example, the network element 1), or the like, and is configured to implement the methods in the foregoing embodiments.

The communication apparatus 1100 includes a transceiver unit 1110 and a processing unit 1120. The following describes the transceiver unit 1110 and the processing unit 1120 by using examples.

The transceiver unit 1110 may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. Unified descriptions are provided herein, and details are not described below again.

When the communication apparatus 1100 is the network element 1, for example, the transceiver unit 1110 is configured to obtain recognition information of a first scenario, and the processing unit 1120 is configured to perform content related to steps such as processing and control of the network element 1. For example, the processing unit 1120 is configured to determine a first parameter in a first model based on the recognition information of the first scenario.

When the communication apparatus 1100 is the network element 2, for example, the transceiver unit 1110 is configured to receive information 1, and the processing unit 1120 is configured to content related to steps such as processing and control of the network element 2. For example, the processing unit 1120 is configured to collect data of the first scenario, and the like.

The foregoing content is merely used as an example for description.

When the communication apparatus 1100 includes one or more of the network element 1, the network element 2, or the network element 3, the communication apparatus 1100 is responsible for performing one or more of the methods or the steps related to the network element 1, the network element 2, or the network element 3 in the foregoing method embodiments.

Optionally, the communication apparatus 1100 further includes a storage unit 1130. The storage unit 1130 is configured to store a program or code used to perform the foregoing methods.

It should be noted that the transceiver unit in FIG. 11 may correspond to the transceiver circuit in FIG. 10, and the processing unit in FIG. 11 may correspond to the processing circuit in FIG. 10.

The apparatus embodiments shown in FIG. 10 and FIG. 11 are used to implement the content described in FIG. 6 to FIG. 9. For specific execution steps and methods of the apparatuses shown in FIG. 10 and FIG. 11, refer to the content described in the foregoing method embodiments.

This application further provides a chip, including a processor, configured to invoke instructions from a memory and run the instructions stored in the memory, to cause a communication device on which the chip is installed to perform the methods in the foregoing examples. The memory may be integrated into the chip, or may be located outside the chip.

This application further provides another chip, including an input interface, an output interface, and a processor. The input interface, the output interface, and the processor are connected through an internal connection path. The processor is configured to execute code in a memory. When the code is executed, the processor is configured to perform the methods in the foregoing examples. Optionally, the chip further includes the memory. The memory is configured to store a computer program or the code.

This application further provides a processor, configured to be coupled to a memory, and configured to perform a method and a function that are related to the network device or the terminal device in any one of the foregoing embodiments.

Another embodiment of this application provides a computer program product including instructions. When the computer program product runs on a computer, the methods in the foregoing embodiments are implemented.

This application further provides a computer program. When the computer program is run on a computer, the methods in the foregoing embodiments are implemented.

Another embodiment of this application provides a computer-readable storage medium. The computer-readable storage medium stores a computer program. When the computer program is executed by a computer, the methods in the foregoing embodiments are implemented.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories of the systems and methods described in this specification are intended to include, but not limited to, these memories and any memory of another proper type.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired or wireless (for example, infrared, radio, or microwave) manner. The computer-readable storage medium may be any usable medium accessible by the computer, or a data storage device, like a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between the apparatuses or units may be implemented in electronic, mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit. When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory, a random access memory, a magnetic disk, or an optical disc.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

## Claims

1. An artificial intelligence model training method, comprising:

   obtaining recognition information of a first scenario; and
   determining a first parameter in a first model based on the recognition information of the first scenario, wherein the first parameter is used to determine a parameter that needs to be updated in the first model.

2. The method according to claim 1, wherein the determining the first parameter in the first model based on the recognition information of the first scenario comprises:
   determining the first parameter based on the recognition information of the first scenario and at least one association relationship, wherein a first association relationship in the at least one association relationship is used to associate the first parameter with the first scenario.

3. The method according to claim 2, wherein the at least one association relationship is predefined or preconfigured.

4. The method according to any one of claims 1 to 3, wherein the method further comprises:
   communicating the first parameter.

5. The method according to claim 4, wherein the method further comprises:

   determining, based on the recognition information of the first scenario, that the first scenario is not a scenario currently supported by the first model; and
   communicating a message indicating to obtain data of the first scenario.

6. The method according to any one of claims 1 to 3, wherein the method further comprises:

   obtaining first data, wherein the first data is related to the first scenario; and
   updating, by using the first data, the parameter that needs to be updated in the first model, to obtain an updated first model.

7. The method according to claim 6, wherein the first data comprises any one of the following:
   data of the first scenario, the data of the first scenario and data of a scenario related to the first scenario, or data obtained through data generation based on the data of the first scenario and a data feature of second data, wherein the second data is data of a scenario currently supported by the first model, and the scenario related to the first scenario is the scenario currently supported by the first model.

8. The method according to claim 7, wherein the obtaining the first data comprises:

   obtaining the first data from a data collection network element, wherein the first data is the data of the first scenario;
   obtaining the first data from a data generation network element, wherein the first data is the data obtained through data generation based on the data of the first scenario and the data feature
   obtaining the first data from a data storage network element, wherein the first data is the data of the first scenario and the data of the scenario related to the first scenario.

9. The method according to any one of claims 1 to 8, wherein

   the parameter that needs to be updated in the first model is the first parameter, or
   the parameter that needs to be updated in the first model is a part or all of parameters in the first model other than the first parameter.

10. The method according to any one of claims 7 to 9, wherein the data feature of the second data comprises at least one of the following:
    a signal-to-noise ratio, a reference signal received power, or a data distribution status.

11. The method according to any one of claims 1 to 10, wherein the method further comprises:
    determining, based on the recognition information of the first scenario, that the first scenario is not the scenario currently supported by the first model.

12. An artificial intelligence model training method, comprising:

    obtaining recognition information of a first scenario;
    determining, based on the recognition information of the first scenario, a scenario related to the first scenario, wherein the scenario related to the first scenario is a scenario currently supported by a first model; and
    obtaining amount information of data of the scenario related to the first scenario, wherein the data of the scenario related to the first scenario is used to update the first model, and an updated first model supports the first scenario.

13. The method according to claim 12, wherein the method further comprises:

obtaining the data of the scenario related to the first scenario.

14. The method according to claim 12 or 13, wherein the method further comprises:

    determining, based on the recognition information of the first scenario, that the first scenario is not the scenario currently supported by the first model; and
    sending first indication information, wherein the first indication information indicates an amount of to-be-obtained data in the first scenario, the amount information of the data of the scenario related to the first scenario is used to determine the amount of the to-be-obtained data in the first scenario, and data of the first scenario is used to update the first model.

15. The method according to any one of claims 12 to 14, wherein the determining, based on the recognition information of the first scenario, the scenario related to the first scenario comprises:
    determining according to a predefined rule, or determining based on feature information of a scenario.

16. The method according to any one of claims 12 to 15, wherein the first indication information further indicates to obtain the data of the first scenario.

17. An artificial intelligence model training method, comprising:

    obtaining recognition information of a first scenario;
    determining, based on the recognition information of the first scenario, that the first scenario is not a scenario currently supported by a first model; and
    communicating first indication information, wherein the first indication information indicates to obtain data of the first scenario, the data of the first scenario is used to update the first model, and an updated first model supports the first scenario.

18. An artificial intelligence model training method, comprising:

    obtaining data of a first scenario;
    performing data generation based on the data of the first scenario and a data feature of second data, to obtain first data, wherein the second data is data of a scenario currently supported by a first model, the first data is used to update the first model, and an updated first model supports the first scenario; and
    sending the first data.

**19.** The method according to claim 18, wherein the data feature of the second data comprises at least one of the following:

a signal-to-noise ratio, a reference signal received power, or a data distribution status.

**20.** An artificial intelligence model training method, comprising:

determining recognition information of a first scenario; and

sending the recognition information of the first scenario.

**21.** The method according to claim 20, wherein the method further comprises:

receiving indication information; and

obtaining data of the first scenario based on the indication information.

**22.** The method according to claim 21, wherein the indication information comprises information about an amount of to-be-obtained data in the first scenario; and

the obtaining the data of the first scenario based on the indication information comprises:

obtaining the data of the first scenario based on the information about the amount of the to-be-obtained data in the first scenario.

**23.** An artificial intelligence model training method, comprising:

obtaining indication information, wherein the indication information indicates to obtain data of a scenario related to a first scenario, and the indication information comprises identification information of the scenario related to the first scenario;

determining, based on the identification information of the scenario related to the first scenario and at least one association relationship, the data of the scenario related to the first scenario, wherein a first association relationship in the at least one association relationship is used to associate the scenario related to the first scenario with the data of the scenario related to the first scenario; and

communicating the data of the scenario related to the first scenario.

**24.** The method according to claim 23, wherein the at least one association relationship is predefined or preconfigured.

**25.** A communication apparatus, comprising a processor, wherein the processor is configured to: by executing a computer program or instructions or through a logic circuit,

cause the communication apparatus to perform the method according to any one of claims 1 to 11; or
cause the communication apparatus to perform the method according to any one of claims 12 to 16; or
cause the communication apparatus to perform the method according to claim 17; or
cause the communication apparatus to perform the method according to claim 18 or 19; or
cause the communication apparatus to perform the method according to any one of claims 20 to 22; or
cause the communication apparatus to perform the method according to claim 23 or 24.

**26.** A communication apparatus, comprising a logic circuit and an input/output interface, wherein the input/output interface is configured to input and/or output a signal; and

the logic circuit is configured to perform the method according to any one of claims 1 to 11; or
the logic circuit is configured to perform the method according to any one of claims 12 to 16; or
the logic circuit is configured to perform the method according to claim 17; or
the logic circuit is configured to perform the method according to claim 18 or 19; or
the logic circuit is configured to perform the method according to any one of claims 20 to 22; or
the logic circuit is configured to perform the method according to claim 23 or 24.

**27.** A computer-readable storage medium, wherein the computer-readable storage medium stores a computer program or instructions, and when the computer program or the instructions are run on a computer,

the method according to any one of claims 1 to 11 is performed; or
the method according to any one of claims 12 to 16 is performed; or
the method according to claim 17 is performed; or
the method according to claim 18 or 19 is performed; or
the method according to any one of claims 20 to 22 is performed; or
the method according to claim 23 or 24 is performed.

**28.** A communication system, wherein the communication system comprises a model deployment network element and a data collection network element, wherein

the model deployment network element is configured to perform the method according to any one of claims 1 to 11, and
the data collection network element is configured to perform the method according to any one of claims 20 to 22;
or
the model deployment network element is configured to perform the method according to any one of claims 12 to 16, and
the data collection network element is configured to perform the method according to any one of claims 20 to 22.

**29.** A communication system, wherein the communication system comprises a model training network element and a data collection network element, wherein

the model training network element is configured to perform the method according to any one of claims 1 to 11, and
the data collection network element is configured to perform the method according to any one of claims 20 to 22;
or
the model training network element is configured to perform the method according to any one of claims 12 to 16, and
the data collection network element is configured to perform the method according to any one of claims 20 to 22.

**30.** The communication system according to claim 28 or 29, wherein the communication system further comprises a data generation network element, wherein the data generation network element is configured to perform the method according to claim 18 or 19.

**31.** The communication system according to any one of claims 28 to 30, wherein the communication system further comprises a data storage network element, wherein the data storage network element is configured to perform the method according to claim 23 or 24.

— 100 —

FIG. 1

- 200 -

FIG. 2

- 300 -

FIG. 3

- 400 -

Terminal
device 120

Network device 110

AI network
element 140

Terminal
device 130

FIG. 4

─ 500 ─

$x_0$ $\quad w_0 {}^* x_0$

$x_1$ $\quad w_1 {}^* x_1$

Neuron

$y = f\left(\displaystyle\sum_{i=0}^{n} w_i {}^* x_i + b\right)$

$x_2$ $\quad w_2 {}^* x_2$

$y$

FIG. 5

- 600 -

Network
element 2

Model deployment
network element

Network element 1
(model training network element)

Recognition
information of a
first scenario

S601: Obtain the recognition
information of the first scenario

S601: Obtain the recognition
information of the first scenario

S602: Determine a first parameter in a first
model based on the recognition information
of the first scenario, where the first
parameter is used to determine a parameter
that needs to be updated in the first model

Network element 1
(model deployment network element)

Network
element 2

S601: Obtain recognition
information of a first scenario

S602: Determine a first parameter in a first
model based on the recognition information
of the first scenario, where the first
parameter is used to determine a parameter
that needs to be updated in the first model

FIG. 6

- 700 -

| Network element 2 | Network element 1 | Network element 3 | Model training network element |

S701: Determine recognition information of a first scenario

S702: Recognition information of the first scenario →

S703: Determine, based on the recognition information of the first scenario, that the first scenario is not a scenario currently supported by a first model

S704: Information 1, where the information 1 indicates to obtain data of the first scenario

← S705: Data of the first scenario →

S706: Determine a first parameter in the first model based on the recognition information of the first scenario, where the first parameter is used to determine a parameter that needs to be updated in the first model

—— S707: First parameter ——→

S708: Obtain first data, where the first data is related to the first scenario

S709: Update, by using the first data, the parameter that needs to be updated in the first model, to obtain an updated first model, where the parameter that needs to be updated is determined based on the first parameter

←—— S710: Updated first model ——

FIG. 7

- 800 -

| Network element 2 | Network element 1 | Network element 3 | Model deployment network element |
|---|---|---|---|

S801: Determine recognition information of a first scenario

S802: Recognition information of the first scenario →

S802: Recognition information of the first scenario →

S803: Determine, based on the recognition information of the first scenario, that the first scenario is not a scenario currently supported by a first model

S804: Information 1, where the information 1 indicates to obtain data of the first scenario

S805: Data of the first scenario →

S806: Determine a first parameter in the first model based on the recognition information of the first scenario, where the first parameter is used to determine a parameter that needs to be updated in the first model

S807: Obtain first data, where the first data is related to the first scenario

S808: Update, by using the first data, the parameter that needs to be updated in the first model, to obtain an updated first model

S809: Updated first model →

FIG. 8

- 900 -

| Network element 2 | | Network element 1 |

S901: Obtain recognition information of a first scenario

S902: Determine, based on the recognition information of the first scenario, a scenario related to the first scenario

S903: Obtain amount information of data of the scenario related to the first scenario

S904: Information 3, where the information 3 indicates an amount of to-be-obtained data in the first scenario

FIG. 9

Communication apparatus 1000

Processing circuit 1010

| Memory 1040 |

Bus 1030

Transceiver circuit 1020

FIG. 10

Communication apparatus 1100

Transceiver unit 1110

Processing unit 1120

Storage unit 1130

FIG. 11

## INTERNATIONAL SEARCH REPORT

| International application No. |
| --- |
| **PCT/CN2024/121470** |

### A. CLASSIFICATION OF SUBJECT MATTER

G06N 3/08(2023.01)i

According to International Patent Classification (IPC) or to both national classification and IPC

### B. FIELDS SEARCHED

Minimum documentation searched (classification system followed by classification symbols)

IPC: G06N

Documentation searched other than minimum documentation to the extent that such documents are included in the fields searched

Electronic data base consulted during the international search (name of data base and, where practicable, search terms used)

VEN, CNABS, CNTXT, ENTXTC, WOTXT, USTXT, CNKI, IEEE: 场景, 环境, 风格, 标签, 标识, 识别, 对应, 相应, 相关, 参数, 模型, 训练, 更新, scenario, environment, style, label, identification, correspondence, correlation, parameters, model, training, updat+

### C. DOCUMENTS CONSIDERED TO BE RELEVANT

| Category* | Citation of document, with indication, where appropriate, of the relevant passages | Relevant to claim No. |
| --- | --- | --- |
| X | CN 110245224 A (NETEASE (HANGZHOU) NETWORK CO., LTD.) 17 September 2019 (2019-09-17) <br> description, paragraphs [86]-[230] | 1-5, 9, 11, 20, 25-31 |
| X | CN 114677575 A (HUAWEI TECHNOLOGIES CO., LTD.) 28 June 2022 (2022-06-28) <br> description, paragraphs [207]-[385] | 12-16, 23-24 |
| X | CN 111783881 A (SHANGHAI TIANRANG INTELLIGENT TECHNOLOGY CO., LTD.) <br> 16 October 2020 (2020-10-16) <br> description, paragraphs [64]-[144] | 17 |
| Y | CN 110245224 A (NETEASE (HANGZHOU) NETWORK CO., LTD.) 17 September 2019 (2019-09-17) <br> description, paragraphs [86]-[230] | 6-8, 10, 21-22 |
| Y | CN 114677575 A (HUAWEI TECHNOLOGIES CO., LTD.) 28 June 2022 (2022-06-28) <br> description, paragraphs [207]-[385] | 6-8, 10, 18-19, 21-22 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 November 2024** | **20 November 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**EP 4 783 072 A1**

## INTERNATIONAL SEARCH REPORT

| | International application No. |
|---|---|
| | **PCT/CN2024/121470** |

**C.    DOCUMENTS CONSIDERED TO BE RELEVANT**

| Category* | Citation of document, with indication, where appropriate, of the relevant passages | Relevant to claim No. |
|---|---|---|
| Y | CN 111783881 A (SHANGHAI TIANRANG INTELLIGENT TECHNOLOGY CO., LTD.) 16 October 2020 (2020-10-16) description, paragraphs [64]-[144] | 18-19 |
| A | CN 116541088 A (HUAWEI TECHNOLOGIES CO., LTD.) 04 August 2023 (2023-08-04) entire document | 1-31 |
| A | CN 113433832 A (QINGDAO HAIER TECHNOLOGY CO., LTD. et al.) 24 September 2021 (2021-09-24) entire document | 1-31 |

Form PCT/ISA/210 (second sheet) (July 2022)

## INTERNATIONAL SEARCH REPORT
### Information on patent family members

International application No.

**PCT/CN2024/121470**

| Patent document cited in search report | | | Publication date (day/month/year) | Patent family member(s) | | | Publication date (day/month/year) |
|---|---|---|---|---|---|---|---|
| CN | 110245224 | A | 17 September 2019 | None | | | |
| CN | 114677575 | A | 28 June 2022 | WO | 2022134766 | A1 | 30 June 2022 |
| CN | 111783881 | A | 16 October 2020 | None | | | |
| CN | 116541088 | A | 04 August 2023 | WO | 2023143267 | A1 | 03 August 2023 |
| | | | | KR | 20240134018 | A | 05 September 2024 |
| | | | | EP | 4446882 | A1 | 16 October 2024 |
| CN | 113433832 | A | 24 September 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311294251